# EUROPÄISCHE PATENTSCHRIFT

(11) **EP 2 691 969 B1**
(45) Veröffentlichungstag und Bekanntmachung des Hinweises auf die Patenterteilung: **29.04.2015**
(21) Anmeldenummer: 12717217.9
(22) Anmeldetag: 26.03.2012
(51) Int. Cl.: H01H 47/00

(54) **SICHERHEITSSCHALTUNGSANORDNUNG ZUM FEHLERSICHEREN EIN- ODER AUSSCHALTEN EINER GEFÄHRLICHEN ANLAGE**
SAFETY CIRCUIT ASSEMBLY FOR SWITCHING A HAZARDOUS SYSTEM ON OR OFF IN A FAILSAFE MANNER
ENSEMBLE DE CIRCUIT DE SÉCURITÉ POUR METTRE SOUS OU HORS TENSION DE MANIÈRE SÉCURISÉE UNE INSTALLATION DANGEREUSE

(30) Priorität: 30.03.2011 DE 102011016137
(43) Veröffentlichungstag der Anmeldung: 05.02.2014
(73) Patentinhaber: Pilz GmbH & Co. KG, 73760 Ostfildern (DE)
(72) Erfinder: SCHWENKEL, Hans, 73760 Ostfildern (DE); GRUBER, Winfried, 73760 Ostfildern (DE)
(74) Vertreter: Witte, Weller & Partner Patentanwälte mbB
(86) Internationale Anmeldenummer: PCT/EP2012/055311
(87) Internationale Veröffentlichungsnummer: WO 2012/130795

(56) Entgegenhaltungen:
- DE-A1- 10 216 226
- DE-B3-102006 027 135

## Beschreibung

Die vorliegende Erfindung betrifft eine Sicherheitsschaltungsanordnung zum fehlersicheren Ein- oder Ausschalten einer gefährlichen Anlage, mit einem Auswertegerät, das dazu ausgebildet ist, ein redundantes Schaltsignal zum fehlersicheren Ein- oder Ausschalten der Anlage zu erzeugen, und mit einem Meldegerät, das über eine Anzahl von Leitungen mit dem Auswertegerät verbunden ist, wobei das Meldegerät einen Betätiger aufweist, der zwischen einem definierten ersten Zustand und einem weiteren Zustand wechselbar ist, wobei das Auswertegerät ein erstes definiertes Pulssignal mit einer Anzahl von ersten Signalpulsen erzeugt und in einer ersten Richtung über die Leitungen zum Meldegerät überträgt, wobei das Meldegerät ein zweites definiertes Pulssignal mit einer Anzahl von zweiten Signalpulsen erzeugt und über die Leitungen in einer zweiten Richtung zum Auswertegerät überträgt, wenn der Betätiger in dem definierten ersten Zustand ist, und wobei das zweite Pulssignal eine vordefinierte Nachbildung des ersten Pulssignals ist.

Die Erfindung betrifft ferner ein Auswertegerät sowie ein Meldegerät für eine solche Sicherheitsschaltungsanordnung.

Eine Sicherheitsschaltungsanordnung dieser Art mit einem Meldegerät und einem Auswertegerät ist aus DE 10 2004 020 997 A1 bekannt.

Eine Sicherheitsschaltungsanordnung im Sinne der vorliegenden Erfindung ist eine Schaltungsanordnung mit zumindest zwei funktionsbestimmenden Komponenten, die zusammenwirken, um den gefährlichen Betrieb einer technischen Anlage abzusichern, d.h. um insbesondere Unfälle zu vermeiden, die die Gesundheit oder das Leben von Personen im Bereich der Anlage gefährden. Die eine Komponente ist ein Auswertegerät, das häufig als Sicherheitsschaltgerät oder Sicherheitssteuerung bezeichnet wird. Das Auswertegerät ist typischerweise dazu ausgebildet, einen Stromversorgungspfad zu einem oder mehreren Aktoren der Anlage, wie Schütze, Magnetventile oder elektromotorische Antriebe, fehlersicher zu unterbrechen, um die Anlage in einen ungefährlichen Zustand zu bringen. Bei größeren Anlagen kann sich diese Funktion des Auswertegerätes auch auf Teile oder Bereiche der Anlage beschränken, oder es werden verschiedene Bereiche einer größeren Anlage mit mehreren Auswertegeräten getrennt abgesichert. Wichtig ist, dass die Auswertegeräte selbst dann einen sicheren Anlagenbetriebszustand gewährleisten, wenn Fehler auftreten, etwa wenn elektronische Bauteile versagen, eine Leitungsverbindung beschädigt wird oder ein anderes Fehlerereignis auftritt. Dementsprechend sind die Auswertegeräte in aller Regel mehrkanalig-redundant aufgebaut und sie besitzen integrierte Überwachungsfunktionen, um potentielle Fehler zu erkennen und die Anlage ggf. frühzeitig abzuschalten. Geeignete Auswertegeräte können programmierbare Sicherheitssteuerungen sein, bei denen der Anwender die individuellen Steuerfunktionen relativ frei bestimmen kann, aber auch einfachere Sicherheitsschaltgeräte mit einem herstellerseitig weitgehend festgelegten Funktionsumfang. Typischerweise sind die Auswertegeräte einfehlersicher im Sinne der Kategorie 3 oder höher der Europäischen Norm EN 954-1, bzw. fehlersicher im Sinne von SIL 2 der Internationalen Norm IEC 61508 oder im Sinne vergleichbarer Anforderungen.

Das Auswertegerät überwacht den Betriebszustand von so genannten Meldegeräten oder Sensoren. Die Begriffe "Meldegeräte" und "Sensoren" werden im folgenden synonym verwendet. Ein Meldegerät liefert Eingangssignale, die von dem Auswertegerät ausgewertet und ggf. mit anderen Eingangssignalen von weiteren Meldegeräten verknüpft werden, um in Abhängigkeit davon die Aktoren der Anlage, ein- oder auszuschalten. In vielen Fällen liefern die Meldegeräte recht einfache binäre Informationen, etwa ob eine mechanische Schutztür geschlossen ist oder nicht, ob ein Not-Aus-Taster betätigt ist oder nicht, ob eine Lichtschranke unterbrochen ist oder nicht. Darüber hinaus können Meldegeräte/Sensoren jedoch auch mehrwertige Messwerte liefern, etwa die Temperatur eines Kessels oder die Drehzahl eines Antriebs. Üblicherweise gibt das Auswertegerät der Sicherheitsschaltungsanordnung den Betrieb der Anlage nur frei, wenn anhand der Signale von den Meldegeräten/Sensoren ein ungefährlicher Betrieb angenommen werden kann. Es gibt aber auch Fälle, in denen Absicherungsmaßnahmen bewusst außer Kraft gesetzt werden, beispielsweise um bei geöffneter Schutztür einen Maschinenbetrieb einzurichten. Häufig wird in diesen Fällen ein spezieller Zustimmtaster verwendet, den der Maschinenbediener betätigen muss. Auch ein solcher Zustimmtaster ist ein sicherheitsrelevantes Meldegerät, dessen Betätigung jedoch in der Regel zum Einschalten und nicht zum Abschalten der Anlage führt.

In einer großen Anlage kann es eine Vielzahl von Meldegeräten/Sensoren geben, die sicherheitsrelevante Eingangssignale an das Auswertegerät liefern. Die einzelnen Meldegeräte/Sensoren können räumlich weit von dem Auswertegerät entfernt sein, was zu einem hohen Installationsaufwand führt. Bei Leitungsverbindungen, die außerhalb eines im Betrieb geschlossenen Schaltschranks oder außerhalb quetschungssicherer Rohre verlaufen, müssen Querschlüsse, die als Folge von Leitungsbeschädigungen auftreten können, von dem Auswertegerät erkannt werden. Daher sind Verbindungsleitungen zwischen Meldegeräten/Sensoren und Auswertegeräten einer Sicherheitsschaltungsanordnung häufig mehrfach-redundant, was den Installationsaufwand weiter erhöht.

Die eingangs genannte DE 10 2004 020 997 A1 beschreibt eine Sicherheitsschaltungsanordnung, bei der eine Vielzahl von Meldegeräten in Reihe an ein fehlersicheres Auswertegerät angeschlossen sind. Das Auswertegerät erzeugt zwei Freigabesignale, die über zwei redundante Leitungen durch die Reihe der Meldegeräte und zurück zum Auswertegerät geführt sind. Unterbricht ein Meldegerät der Reihe zumindest eines der redundanten Freigabesignale, wird dies im Auswertegerät erkannt und ein Stromversorgungspfad zu der Anlage wird unterbrochen. Durch eine geschickte Realisierung der Meldegeräte ist es außerdem möglich, Diagnoseinformationen zu dem Auswertegerät über die Sicherheitsleitungen zu übertragen. Die bekannte Schaltungsanordnung ermöglicht daher einen relativ kostengünstigen Aufbau mit flexiblen Diagnosemöglichkeiten. Allerdings erfordert die praktische Realisierung mindestens vier separate Leitungen oder Leitungsadern, um die redundanten Freigabesignale vom Auswertegerät zu den Meldegeräten und wieder zurück zum Auswertegerät zu führen. Da die Meldegeräte in DE 10 2004 020 997 A1 für die Weiterleitung der redundanten Freigabesignale elektronische Bauteile verwenden, die eine Betriebsspannung benötigen, werden typischerweise zwei weitere Leitungen oder Aderpaare benötigt, um den Meldegeräten die Betriebsspannung und Betriebsmasse zuzuführen. Eine solche Realisierung ist daher trotz der bereits erreichten Vorteile noch aufwändig, insbesondere wenn zwischen einzelnen Meldegeräten und dem Auswertegerät große Entfernungen überbrückt werden müssen. Bei der Steuerung von Skiliften etwa können zwischen einem Meldegerät und dem Auswertegerät Entfernungen von mehreren Kilometern liegen, und es ist in solchen Fällen wünschenswert, vorhandene Leitungen zu nutzen, wobei für eine Realisierung gemäß DE 10 2004 020 997 A1 in der Regel nicht genügend Leitungsadern zur Verfügung stehen. Aber auch in anderen Produktions- und/oder Förderanlagen können große Entfernungen zwischen den Meldegeräten und einem Auswertegerät liegen, etwa an Flughäfen oder in einer großen Werkhalle.

DE 199 11 698 A1 beschreibt eine andere Sicherheitsschaltungsanordnung mit einem Auswertegerät und einer Vielzahl von Meldegeräten, die in Reihe an das Auswertegerät angeschlossen sind. Jedes Meldegerät besitzt einen Öffnerkontakt und ist mit einem Codesignalgenerator gekoppelt, der zu Diagnosezwecken ein charakteristisches Codesignal an das Auswertegerät liefert, wenn der Kontakt geöffnet wurde. Für die praktische Realisierung werden zumindest drei Leitungen benötigt. Ein Querschluss zwischen der Leitung am Freigabesignalausgang des Auswertegerätes und der Leitung am Freigabesignaleingang des Auswertegerätes kann allerdings nicht ohne Weiteres erkannt werden, so dass für eine höhere Sicherheitskategorie redundante Signalleitungen benötigt werden. Gegebenenfalls kommen auch hier noch weitere Leitungen für Betriebsspannung und Masse hinzu.

DE 100 11 211 A1 offenbart eine weitere Sicherheitsschaltungsanordnung mit Meldegeräten und einem fehlersicheren Auswertegerät. Die Meldegeräte sind entweder einkanalig über eine Verbindungsleitung oder zweikanalig über zwei redundante Verbindungsleitungen mit dem Auswertegerät verbunden. Die einkanalige Verbindung bietet für sich genommen keine Fehlersicherheit und wird lediglich für einen Starttaster vorgeschlagen, der typischerweise nahe bei der gefährlichen Anlage angeordnet ist. In einem Ausführungsbeispiel ist beschrieben, dass von dem fehlersicheren Auswertegerät zwei unterschiedliche Taktsignale als Freigabesignale über redundante Kontakte eines Not-Aus-Tasters zum Auswertegerät zurückgeführt sind. In diesem Fall werden zumindest vier Leitungen benötigt. Typischerweise kommen jedoch auch hier noch weitere Leitungen für die Spannungsversorgung und/oder Masse der Meldegeräte hinzu.

DE 102 16 226 A1 beschreibt eine Sicherheitsschaltungsanordnung mit mehreren Meldegeräten und Auswertegeräten, wobei zwei Auswertegeräte in Reihe miteinander verbunden sind, um ein Steuerungssystem mit unterschiedlichen Abschaltgruppen zu bilden. In den Ausführungsbeispielen sind die Auswertegeräte über eine einkanalige Verbindungsleitung gekoppelt, über die ein potenzialbezogenes Schaltsignal mit einem statischen Signalanteil und einem dynamischen Signalanteil übertragen wird. Die praktische Realisierung setzt noch eine gemeinsame Masseleitung für die verbundenen Auswertegeräte voraus. Darüber hinaus benötigt jedes Auswertegerät eine Betriebsspannung, so dass die tatsächliche Leitungsanzahl für die Kopplung der Auswertegeräte letztlich doch höher ist als der Begriff "einkanalige Verbindungsleitung" zunächst vermuten lässt.

Aus DE 103 48 884 A1 ist ein Not-Aus-Taster mit einem Stellelement bekannt, das zwischen einer ersten und zumindest einer zweiten Position bewegbar ist. Ein Detektorelement zum Detektieren der Position des Stellelements beinhaltet einen Transponder mit einer individuellen Transponderkennung und eine Leseeinheit für die Transponderkennung. Der Not-Aus-Taster besitzt einen Signaleingang zum Zuführen eines Testsignals, mit dessen Hilfe das Auslesen der Transponderkennung zu Testzwecken unterdrückt werden kann. Zusätzlich werden Anschlüsse für Versorgungsspannung, Masse und einen Signalausgang benötigt, über den Not-Aus-Taster die Information des Detektorelements zu einem fehlersicheren Auswertegerät übertragen kann. Zum Anschließen des Not-Aus-Tasters an ein konventionelles Auswertegerät sind also mindestens vier Leitungen erforderlich.

Ein weiteres Meldegerät ist aus DE 100 23 199 A1 bekannt. In einer Ruhelage des Meldegerätes ist ein Schaltelement geöffnet. In einer bestimmten Betätigungsposition wird das Schaltelement geschlossen. Details zum Anschluss des Meldegerätes an ein fehlersicheres Auswertegerät sind nicht beschrieben.

Den Fachleuten ist ferner ein als ASI(Aktuator-Sensor-Interface)-Bus bezeichnetes Feldbussystem bekannt, das mit einem speziellen zweiadrigen Kabel realisiert werden kann und zum Vernetzen von Sensoren und Aktoren in der Feldebene einer automatisierten Anlage dient. Ein ASI-Busmaster sendet Anfragen an die an den ASI-Bus angeschlossenen Sensoren. Diese übermitteln daraufhin ihren jeweiligen Sensorzustand an den ASI-Busmaster. Dieses System kommt zwar mit zwei Leitungsadern aus. Es erfordert jedoch spezielle Interfacebausteine, die in der Lage sind, das spezielle Busprotokoll zu realisieren. Für eine Sicherheitsschaltungsanordnung der eingangs genannten Art müssen sowohl das Auswertegerät als auch das Meldegerät einen ASI-Bus kompatiblen Interfacebaustein und den speziellen Anschluss an das ASI-Bus-Kabel aufweisen, was für viele einfache Meldegeräte zu aufwendig und teuer ist.

Aus DE 43 33 358 A1 ist eine nicht-sichere Schaltungsanordnung bekannt, bei der über eine zweiadrige Verbindungsleitung sowohl eine Betriebsspannung als auch ein Steuersignal von einem Auswertegerät an ein Magnetventil, also an einen Aktor, übertragen wird.

In einer älteren, nicht-vorveröffentlichten Anmeldung mit dem Aktenzeichen DE 10 2010 025 675.7 ist ein Meldegerät für eine Sicherheitsschaltungsanordnung beschrieben, das über eine einfache Zweidrahtleitung an ein entferntes Auswertegerät angeschlossen werden kann. Allerdings muss das jeweilige Meldegerät vor der erstmaligen Inbetriebnahme am Auswertegerät individuell eingelernt werden.

DE-B-102006027135 beschreibt eine andere Sicherheitsschaltungsanordnung mit einem Auswertegerät und einem Meldegerät.

Vor diesem Hintergrund ist es eine Aufgabe der vorliegenden Erfindung, eine Sicherheitsschaltungsanordnung der eingangs genannten Art anzugeben, die eine noch kostengünstigere und dabei fehlersichere Verbindung zwischen einem Meldegerät und einem Auswertegerät ermöglicht, insbesondere wenn Meldegerät und Auswertegerät räumlich weit voneinander entfernt sind. Es ist ferner eine Aufgabe der Erfindung, ein entsprechendes Meldegerät und ein entsprechendes Auswertegerät anzugeben. Vorzugsweise sollen das Meldegerät und das Auswertegerät ohne einen individuellen Lernvorgang miteinander arbeiten können.

Gemäß einem ersten Aspekt der Erfindung wird diese Aufgabe durch eine Sicherheitsschaltungsanordnung der eingangs genannten Art gelöst, wobei das Meldegerät mit dem Auswertegerät über ein einzelnes Leitungspaar mit einer ersten und einer zweiten Leitung verbunden ist, über die sowohl das erste als auch das zweite Pulssignal zeitlich nacheinander übertragen werden.

Dementsprechend wird ein Meldegerät zur Verwendung in einer Sicherheitsschaltungsanordnung der eingangs genannten Art vorgeschlagen, mit einem Betätiger, der zwischen einem definierten ersten Zustand und einem weiteren Zustand wechselbar ist, und mit einem Paar von Anschlussklemmen zum Anschließen einer ersten und einer zweiten Leitung, die ein Leitungspaar bilden, ferner mit zumindest einem Impulsgenerator, der dazu ausgebildet ist, ein erstes definiertes Pulssignal mit einer Vielzahl von ersten Signalpulen über das Leitungspaar zu empfangen und in Reaktion auf das erste definierte Pulssignal ein zweites definiertes Pulssignal mit einer Vielzahl von zweiten Signalpulsen auf dem Leitungspaar zu erzeugen, wenn der Betätiger in dem definierten ersten Zustand ist, wobei das zweite Pulssignal eine vordefinierte Nachbildung des ersten Pulssignals ist.

Des Weiteren wird ein Auswertegerät zur Verwendung in einer Sicherheitsschaltungsanordnung der eingangs genannten Art vorgeschlagen, mit einem ersten Paar von Anschlussklemmen zum Anschließen einer ersten und einer zweiten Leitung, die ein Leitungspaar bilden, und mit weiteren Anschlussklemmen zum Ausgeben eines fehlersicheren Schaltsignals, mit zumindest einem Auswertekreis, der dazu ausgebildet ist, ein definiertes erstes Pulssignal mit einer Vielzahl von ersten Signalpulsen auf dem Leitungspaar zu erzeugen, wobei der Auswertekreis ferner dazu ausgebildet ist, ein definiertes zweites Pulssignal mit einer Vielzahl von zweiten Signalpulsen über das Leitungspaar aufzunehmen und mit dem ersten definierten Pulssignal zu vergleichen, und wobei der Auswertekreis dazu ausgebildet ist, das fehlersichere Schaltsignal an den weiteren Anschlussklemmen in Abhängigkeit davon zu erzeugen, ob das zweite Pulssignal eine vordefinierte Nachbildung des ersten Pulssignals ist.

Vorzugsweise besitzen sowohl das Meldegerät als auch das Auswertegerät jeweils ein eigenes Gerätegehäuse, an dem die Anschlussklemmen zum Anschließen des Leitungspaars ausgebildet sind und in dem die jeweiligen funktionsbestimmenden Komponenten untergebracht sind.

Die neue Sicherheitsschaltungsanordnung verwendet also ein Leitungspaar, über das das Meldegerät mit dem Auswertegerät verbunden ist. In einigen praktischen Realisierungen ist das Leitungspaar eine Zweidrahtleitung, bei der die erste und die zweite Leitung fest miteinander verbunden sind. Das Leitungspaar kann jedoch auch aus zwei getrennten Einzelleitungen bestehen, oder von zwei Adern eines mehradrigen Kabels gebildet sein. Charakteristisch ist in allen Fällen, dass die Pulssignale zwischen dem Auswertegerät und dem Meldegerät zeitlich abwechseln über lediglich zwei bidirektional genutzte Leitungen ausgetauscht werden.

Im Vergleich zu bekannten Sicherheitsschaltungsanordnungen kann die Anzahl der Verbindungsleitungen zwischen Auswertegerät und Meldegerät damit auf ein Minimum reduziert werden. In bevorzugten Ausführungsbeispielen ist das neue Meldegerät über genau zwei Leitungen mit dem räumlich entfernten Auswertegerät verbunden. Das neue Meldegerät benötigt in diesen Fällen keine weitere Verbindungsleitung zum Auswertegerät, insbesondere keine dritte Leitung für eine Masseverbindung. In anderen Ausführungsbeispielen können jedoch zusätzlich zu den zwei Leitungen des Leitungspaars weitere Verbindungsleitungen zwischen Meldegerät und Auswertegerät vorgesehen sein, etwa zur Versorgung des Meldegerätes mit einer Betriebsspannung oder aus anderen Gründen. Auch in diesen Fällen profitiert die neue Sicherheitsschaltungsanordnung jedoch davon, dass die informationstragenden Signale zwischen dem Meldegerät und dem Auswertegerät über ein bidirektional genutztes Leitungspaar in zueinander entgegengesetzten Richtungen übertragen werden.

Die neue Sicherheitsschaltungsanordnung verwendet ein definiertes erstes Pulssignal, mit dem das Auswertegerät den definierten ersten Zustand des Betätigers im Meldegerät überwacht. Das erste Pulssignal ist ein nicht-stationäres (dynamisches) Signal, das heißt es verändert sich innerhalb eines definierten Zeitintervalls, das klein ist im Vergleich zu den Zeitintervallen, innerhalb der das Auswertegerät das erste Pulssignal zyklisch wiederholt an das Meldegerät überträgt, um eine potentielle Veränderung des Betätigerzustandes zu erkennen. Aufgrund des dynamischen Signals ist die Gefahr, dass ein sogenannter Stuck-at-Fehler dem Auswertegerät einen falschen Betätigerzustand vortäuscht, äußerst gering.

Das Auswertegerät erzeugt das erste Pulssignal, und es erwartet vom Meldegerät ein zweites Pulssignal, das eine vordefinierte Nachbildung des ersten Pulssignals ist. Damit erzeugt das Auswertegerät eine Erwartungshaltung, die vom Meldegerät nur dann erfüllt wird, wenn sich der Betätiger in dem definierten ersten Zustand befindet und zusätzlich keine Fehler in der Sicherheitsschaltungsanordnung vorliegen. Ein Leitungsbruch in den Verbindungsleitungen oder ein Funktionsfehler im Meldegerät würde dazu führen, dass das Meldegerät die vom Auswertegerät definierte Erwartungshaltung nicht erfüllen kann. Das Auswertegerät schaltet dann die gefährliche Anlage ab oder bringt sie anderweitig in einen sicheren Zustand. Da das Auswertegerät das zu erwartende Signal vorgibt und die Antwort des Meldegerätes innerhalb eines definierten Zeitfensters erwartet, das sich an das Absenden des ersten Pulssignals anschließt, ist es wenig wahrscheinlich, dass ein anderes in der technischen Anlage vorkommendes Signal fälschlicherweise als gültiges Signal vom Meldegerät interpretiert wird.

Darüber hinaus besitzt die neue Sicherheitsschaltungsanordnung den Vorteil, dass das Meldegerät mit einer sehr einfachen und damit kostengünstigen Schaltung realisiert werden kann, die im Wesentlichen dazu ausgebildet ist, ein über das Leitungspaar empfangenes erstes Pulssignal nachzubilden und als zweites Pulssignal über genau dieses Leitungspaar wieder zurückzuschicken, sofern sich der Betätiger in seinem ersten definierten Zustand befindet. Das erste und das zweite Pulssignal sind also signaltechnisch sehr ähnlich. In einigen Ausführungsbeispielen sind das erste und das zweite Pulssignal nahezu identisch. In anderen Ausführungsbeispielen kann sich das zweite Pulssignal jedoch von dem ersten Pulssignal unterscheiden, etwa weil es im Vergleich zu dem ersten Pulssignal invertiert ist, im Vergleich zu dem ersten Pulssignal eine andere Pulslänge hat und/oder eine definierte Anzahl von Pulsen mehr oder weniger besitzt. Die Unterschiede zwischen dem ersten und zweiten Pulssignal sind jedoch derart, dass der individuelle Charakter und/oder eine in dem ersten Pulssignal codierte Information weitgehend erhalten bleiben, so dass das Auswertegerät das zweite Pulssignal ohne einen individuellen Einlernvorgang als gültige Reaktion auf das erste Pulssignal erkennen kann.

In einigen Ausführungsbeispielen repräsentiert das erste Pulssignal eine Bitfolge, die auch in dem zweiten Pulssignal zumindest überwiegend enthalten ist. Es können einzelne Bits vom Meldegerät hinzugefügt werden oder weggelassen werden, so lange der überwiegend Teil der vom Auswertegerät zum Meldegerät gesendeten Bitfolge wieder zum Auswertegerät zurückgesendet wird. Da das Meldegerät das erste Pulssignal nachbildet, benötigt die neue Sicherheitsschaltungsanordnung keinen Lernvorgang, um das Auswertegerät auf das individuelle Meldegerät zu konfigurieren.

In gewisser Weise imitiert die neue Sicherheitsschaltungsanordnung die bei den eingangs genannten Sicherheitsschaltungsanordnungen verwendete Signalschleife, mit der ein Freigabesignal vom Auswertegerät über das Meldegerät zurück zum Auswertegerät geführt ist. Im Unterschied zu den bekannten Anordnungen repliziert das Meldegerät das vom Auswertegerät erhaltene Überwachungssignal jedoch aktiv, und es verwendet für den Rückweg genau dasselbe Leitungspaar wie auf dem Hinweg. Dies wird dadurch möglich, dass das erste und das zweite Pulssignal zeitlich nacheinander über das einzelne Leitungspaar übertragen werden. Dementsprechend besitzen das Auswertegerät und das Meldegerät ein definiertes Zeitverhalten, das den zeitlichen Abstand zwischen erstem und zweitem Pulssignal festlegt.

Im Unterschied zu anderen Kommunikationsverbindungen mit bidirektional genutzten Leitungen kann die neue Sicherheitsschaltungsanordnung jedoch auf Protokollmaßnahmen, wie etwa einen Handshaking-Mechanismus verzichten, da die zwischen Auswertegerät und Meldegerät übertragenen Signale im Wesentlichen vom Auswertegerät bestimmt werden und das Meldegerät ein vom Auswertegerät gesendetes Pulssignal lediglich in nachgebildeter Form wieder an das Auswertegerät zurücksendet.

Insgesamt ermöglicht die neue Sicherheitsschaltungsanordnung eine sehr einfache und kostengünstige Verbindung zwischen einem Auswertegerät und einem räumlich entfernten Meldegerät mit einem Betätiger, dessen Zustand das Auswertegerät überwachen muss, um in Abhängigkeit davon eine gefährliche Anlage fehlersicher ein- oder auszuschalten. Ein individuelles Anlernen des Meldegerätes an das Auswertgerät ist regelmäßig nicht erforderlich, da das Meldegerät das erste Pulssignal im wesentlichen repliziert. Die oben genannte Aufgabe ist daher vollständig gelöst.

In einer bevorzugten Ausgestaltung der Erfindung überträgt die erste Leitung das erste Pulssignal, während die zweite Leitung ein erstes Referenzpotential führt, und die zweite Leitung überträgt das zweite Pulssignal, während die erste Leitung ein zweites Referenzpotential führt. Vorzugsweise ist das jeweilige Referenzpotential weitgehend statisch, so dass die Signalpulse des ersten bzw. zweiten Pulssignals im Wesentlichen auf einer der beiden Leitungen erscheinen, während die andere der beiden Leitungen ein weitgehend statisches Potential führt. In bevorzugten Ausführungsbeispielen sind die Signalpulse der Pulssignale Spannungspulse, die zwischen den beiden Leitungen anliegen, wobei jeweils eine der Leitungen ein Referenzpotential für die andere führt.

In dieser Ausgestaltung tauschen die beiden Leitungen abhängig von der Übertragungsrichtung des ersten bzw. zweiten Pulssignals ihre Funktion. Das erste Pulssignal erscheint im Wesentlichen auf der ersten Leitung, während die zweite Leitung das Referenzpotential führt. Die informationstragenden Signalpulse werden also im Wesentlichen auf der ersten Leitung erzeugt und übertragen. Demgegenüber werden die informationstragenden Signalpulse des zweiten Pulssignals im Wesentlichen auf der zweiten Leitung übertragen. Das vom Auswertegerät ausgehende erste Pulssignal und das zum Auswertegerät zurückkehrende zweite Pulssignal werden also auf unterschiedlichen Leitungen des Leitungspaars übertragen.

Diese Ausgestaltung ermöglicht eine noch bessere Erkennung von Querschlüssen, das heißt von fehlerhaften Signaleinkopplungen auf einer oder beiden Leitungen infolge einer beschädigten oder falsch angeschlossenen Leitung. Dadurch, dass das Auswertegerät das erste Pulssignal im Wesentlichen auf einer der beiden Leitungen aussendet und zeitlich verzögert auf der anderen der beiden Leitungen erwartet, ist die Wahrscheinlichkeit, dass das auf der ersten Leitung ausgesendete Pulssignal fälschlicherweise als zurückkehrendes zweites Pulssignal erkannt wird, praktisch eliminiert. Eine besonders einfache und zudem sichere Realisierung ergibt sich zudem, wenn die beiden Referenzpotentiale verschieden voneinander sind, weil dann ein Querschluss zwischen den beiden Leitungen auch schon anhand der Referenzpotentiale detektierbar ist.

In einer weiteren Ausgestaltung erzeugt das Meldegerät das zweite Pulssignal nur, wenn der Betätiger in dem definierten ersten Zustand ist.

In dieser Ausgestaltung bleibt das Meldegerät "stumm", wenn der Betätiger nicht in dem definierten ersten Zustand ist. Alternativ hierzu ist es in anderen Ausgestaltungen möglich, dass das Meldegerät in Abhängigkeit vom Zustand des Betätigers verschiedene Pulssignale an das Auswertegerät sendet. Die hier bevorzugte Ausgestaltung besitzt demgegenüber den Vorteil, dass das Meldegerät einfacher und damit kostengünstiger realisiert werden kann. Darüber hinaus verhält sich das Meldegerät in dieser Ausgestaltung weitgehend kompatibel zu herkömmlichen Meldegeräten, bei denen eine Signalschleife vom Auswertegerät über das Meldegerät zurück zum Auswertegerät geführt ist.

In einer weiteren Ausgestaltung beinhaltet das erste Pulssignal eine vordefinierte Kennung, die das Auswertegerät eindeutig identifiziert. In einigen bevorzugten Ausführungsbeispielen ist die vordefinierte Kennung eine eindeutige Seriennummer, die vom Hersteller des Auswertegerätes festgelegt und dauerhaft im Auswertegerät gespeichert ist.

Da das zweite Pulssignal eine vordefinierte Nachbildung des ersten Pulssignals ist, beinhaltet auch das zweite Pulssignal die vordefinierte Kennung. Die Ausgestaltung besitzt den Vorteil, dass das Auswertegerät "sein" Pulssignal anhand der eindeutigen Kennung identifizieren kann. Das Risiko, dass zwei typgleiche Auswertegeräte, die beispielsweise in einem Schaltschrank nebeneinander montiert sind, fälschlicherweise ein zum anderen Auswertegerät gehörendes Pulssignal als gültiges zweites Pulssignal interpretieren, ist noch weiter reduziert. Daher ermöglicht diese Ausgestaltung eine noch höhere Fehlersicherheit.

Besonders vorteilhaft ist es, wenn zumindest das erste Pulssignal im Wesentlichen aus der vordefinierten Kennung besteht, das heißt wenn das erste Pulssignal über die vordefinierte Kennung hinaus keine weiteren nennenswerten informationstragenden Signalanteile aufweist, da das erste Pulssignal in diesem Fall kurz ist und eine schnellere Abschaltung einer gefährlichen Anlage im Fehlerfall oder bei einer Betätigung des Betätigers ermöglicht.

In einer weiteren Ausgestaltung weist das Meldegerät einen Energiespeicher auf, der von dem Auswertegerät über die erste und die zweite Leitung aufgeladen wird.

In dieser Ausgestaltung kommt das neue Meldegerät ohne eine zusätzliche Spannungsversorgung aus, da es die zum Erzeugen des zweiten Pulssignals benötigte Energie vom Auswertegerät über das Leitungspaar erhält. Die Ausgestaltung ermöglicht eine sehr vorteilhafte Realisierung mit genau zwei Verbindungsleitungen zwischen Meldegerät und Auswertegerät und ohne zusätzliche Stromversorgung am Meldegerät. In einigen Ausführungsbeispielen wird der Energiespeicher des Meldegerätes ausschließlich über die Signalpulse des ersten Pulssignals aufgeladen. In anderen Ausführungsbeispielen kann alternativ oder ergänzend ein spezieller "Ladezyklus" vorgesehen sein, in dem das Auswertegerät den Energiespeicher im Meldegerät vor oder nach dem Senden des ersten Pulssignals auflädt.

In einer weiteren Ausgestaltung weist das Meldegerät einen ersten Kanal und einen zweiten Kanal auf, die den ersten Zustand des Betätigers redundant überwachen.

In dieser Ausgestaltung ist das neue Meldegerät trotz der reduzierten Anzahl von lediglich zwei Verbindungsleitungen mehrkanalig realisiert. Das Meldegerät ermöglicht daher eine höhere Fehlersicherheit bei der Überwachung des Betätigers.

In einer weiteren Ausgestaltung erzeugen sowohl der erste als auch der zweite Kanal die zweiten Signalpulse.

In dieser Ausgestaltung sind beide Kanäle an der Erzeugung des zweiten Pulssignals beteiligt, so dass das Auswertegerät von jedem der redundanten Kanäle eine Rückmeldung erhält. In einigen Ausführungsbeispielen können die zwei (oder mehr) Kanäle des Meldegerätes das definierte zweite Pulssignal gemeinsam erzeugen, etwa indem die Kanäle abwechselnd die einzelnen Signalpulse eines zweiten Pulssignals erzeugen. In anderen Ausführungsbeispielen erzeugen die Kanäle des Meldegerätes das definierte zweite Pulssignal wechselweise. Bei einem zweikanaligen Meldegerät "antwortet" jeder Kanal also nur bei jedem zweiten Empfang des ersten Pulssignals.

In einer weiteren Ausgestaltung sind der erste und der zweite Kanal parallel zueinander an die zwei Leitungen angeschlossen.

Diese Ausgestaltung ermöglicht eine sehr einfache und kostengünstige Realisierung, bei der die Kanäle des Meldegerätes weitgehend gleich aufgebaut sind. Die Ausgestaltung ist zudem vorteilhaft, wenn die redundanten Kanäle das zweite Pulssignal gemeinsam erzeugen sollen. Alternativ ist es jedoch möglich, dass das erste Pulssignal eine Kanalauswahlinformation enthält, beispielsweise in Form eines Adressbits, anhand dessen das Auswertegerät bestimmen kann, welcher der redundanten Kanäle des Meldegerätes das zweite Pulssignal erzeugen soll. Die zuletzt genannte Variante ermöglicht eine vorteilhafte Diagnose in Fällen, in denen lediglich ein Kanal des Meldegerätes ausfällt, da das Auswertegerät bestimmen kann, welcher Kanal des Meldegerätes abgefragt wird.

In einer weiteren Ausgestaltung sind der erste und der zweite Kanal antiparallel zueinander an die zwei Leitungen angeschlossen.

In dieser Ausgestaltung sind die beiden Kanäle des Meldegerätes zwar parallel an die Leitungen angeschlossen, allerdings mit unterschiedlicher Polarität. Infolge dessen kann das Auswertegerät über die Polarität der Signale auf den zwei Verbindungsleitungen auswählen, welcher der redundanten Kanäle des Meldegerätes das zweite Pulssignal erzeugen soll. Auch diese Ausgestaltung ermöglicht also eine vorteilhafte Diagnose in Fällen, in denen lediglich ein Kanal des Meldegerätes einen Funktionsfehler hat. Die Ausgestaltung besitzt darüber hinaus den Vorteil, dass das erste Pulssignal ohne Adressbit und folglich kürzer gebildet werden kann. Ein weiterer Vorteil dieser Ausgestaltung besteht darin, dass die Polarität der Anschlussklemmen am Auswertegerät und Meldegerät beliebig ist, da sie im Verlauf des Betriebs ohnehin gewechselt wird.

In einer weiteren Ausgestaltung weist das Meldegerät zumindest einen Betätigungsschalter auf, der in Abhängigkeit von dem Zustand des Betätigers geöffnet oder geschlossen ist, und zumindest einen Impulsgenerator, der das zweite Pulssignal erzeugt, wobei der zumindest eine Betätigerschalter zwischen dem Impulsgenerator und dem Leitungspaar angeordnet ist.

In dieser Ausgestaltung wird der Impulsgenerator, der das zweite Pulssignal erzeugt, mit dem Betätigerschalter von dem Leitungspaar getrennt, wenn sich der Betätiger nicht in seinem ersten definierten Zustand befindet. Die Ausgestaltung ermöglicht eine sehr einfache und kostengünstige Realisierung, bei der das Meldegerät das definierte zweite Pulssignal nur dann an das Auswertegerät senden kann, wenn sich der Betätiger in seinem definierten ersten Zustand befindet.

In einer weiteren Ausgestaltung weist das Meldegerät zumindest einen Impulsgenerator auf, der das zweite Pulssignal erzeugt, wobei der zumindest eine Impulsgenerator einen Schalter aufweist, der dazu ausgebildet ist, die erste und die zweite Leitung gegeneinander kurzzuschließen. Vorteilhafterweise besitzt das Auswertegerät in dieser Ausgestaltung einen Pull-up-Widerstand, über den das Auswertegerät ein definiertes High-Potential von einer der zwei Leitungen erzeugen kann, während das Meldegerät das zweite Pulssignal erzeugt.

Diese Ausgestaltung ermöglicht eine sehr einfache und kostengünstige Realisierung des Meldegerätes, da der Impulsgenerator lediglich die auf den beiden Verbindungsleitungen vorhandenen Potentiale kurzschließen muss, um einen Signalpuls für das zweite Pulssignal zu erzeugen. Das Meldegerät benötigt zudem nur wenig Energie zum Senden des zweiten Pulssignals.

In einer weiteren Ausgestaltung weist der zumindest eine Impulsgenerator einen zweiten Schalter auf, der mit dem ersten Schalter eine Gegenkontaktstufe bildet.

In dieser Ausgestaltung besitzt der Impulsgenerator zumindest zwei Schalter, mit denen die "Sendeleitung" des Leitungspaars wechselweise auf eines von zwei verschiedenen Potentialen gezogen werden kann. Die Ausgestaltung ermöglicht eine höhere Übertragungsgeschwindigkeit, da die Leitung mit jedem Signalpuls aktiv umgeladen wird. Die höhere Geschwindigkeit ist für eine schnelle Reaktion der Sicherheitsschaltungsanordnung bei einer Betätigung des Betätigers und/oder einer Fehlersituation von Vorteil.

In einer weiteren Ausgestaltung erzeugt das Auswertegerät eine erste Serie von ersten Pulssignalen und das Meldegerät erzeugt eine zweite Serie von zweiten Pulssignalen, wobei die erste Serie ein Datenwort mit einer Vielzahl von ersten Stellen bildet, wobei die zweite Serie ein Datenwort mit einer Vielzahl von zweiten Stellen bildet, und wobei die ersten und zweiten Stellen wechselweise über das Leitungspaar übertragen werden.

In dieser Ausgestaltung transportiert jedes Pulssignal nur einen Teil der Gesamtinformation, die zwischen dem Auswertegerät und dem Meldegerät ausgetauscht wird. Wenn das Auswertegerät beispielsweise eine Seriennummer mit n Stellen an das Meldegerät überträgt, kann das Meldegerät nach jeder einzelnen Stelle ein zweites Pulssignal an das Auswertegerät zurücksenden, so dass die gesamte Seriennummer erst über die Serie von n ersten und zweiten Pulssignalen ausgetauscht wird. Die Ausgestaltung ermöglicht auf der einen Seite eine mehrstellige individuelle Kennung mit einem hohen Detaillierungsgrad, das heißt die Wahrscheinlichkeit, dass zwei typgleiche Auswertegeräte dieselbe Kennung verwenden, ist noch weiter reduziert. Andererseits kann die neue Sicherheitsschaltungsanordnung schnell auf etwaige Abschaltbefehle des Meldegerätes reagieren, da das Meldegerät nicht den Empfang der gesamten Kennung abwarten muss, bevor es das zweite Pulssignal an das Auswertegerät zurücksendet. Darüber hinaus führt diese Ausgestaltung zu einer weiteren Dynamisierung der Signale zwischen Auswertegerät und Meldegerät, da sich die übertragenen Pulssignale innerhalb der Serie zumindest teilweise voneinander unterscheiden. Etwaige Querschlüsse auf den zwei Verbindungsleitungen lassen sich daher noch zuverlässiger ausschließen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. zeigen:
- Fig. 1: eine vereinfachte Darstellung eines Ausführungsbeispiels der neuen Sicherheitsschaltungsanordnung,
- Fig. 2: eine vereinfachte Darstellung eines Ausführungsbeispiels eines Meldegerätes für die Sicherheitsschaltungsanordnung aus Fig. 1,
- Fig. 3: eine vereinfachte Darstellung eines weiteren Ausführungsbeispiels eines neuen Meldegerätes,
- Fig. 4: eine vereinfachte Darstellung eines weiteren Ausführungsbeispiels der neuen Sicherheitsschaltungsanordnung, und
- Fig. 5: eine vereinfachte Darstellung der Kommunikation zwischen dem Meldegerät und dem Auswertegerät der neuen Sicherheitsschaltungsanordnung in einem weiteren Ausführungsbeispiel.

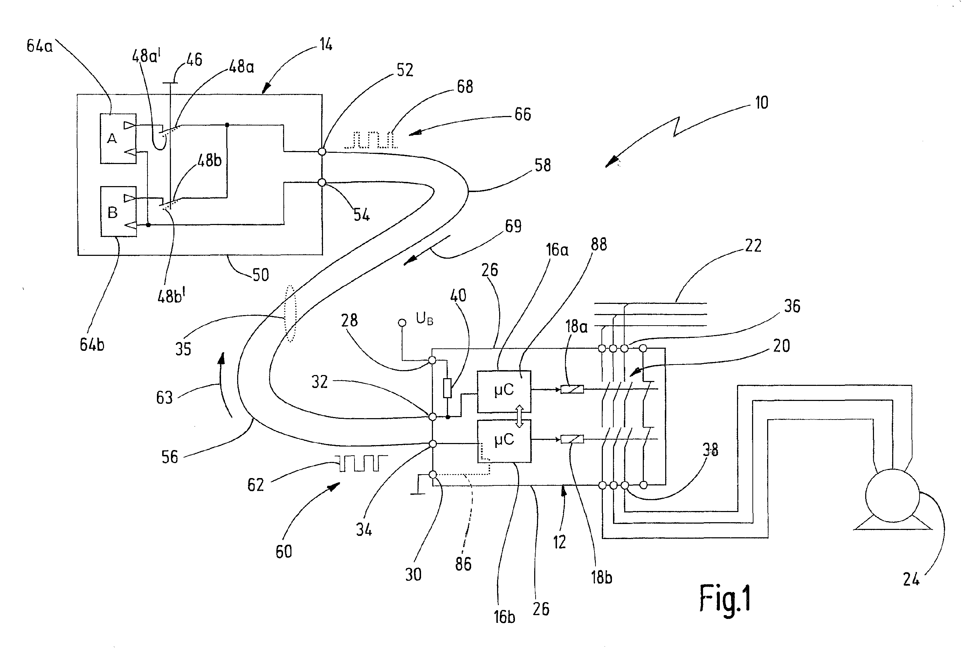

In Fig. 1 ist ein Ausführungsbeispiel der neuen Sicherheitsschaltungsanordnung in seiner Gesamtheit mit der Bezugsziffer 10 bezeichnet. Die Sicherheitsschaltungsanordnung 10 beinhaltet ein Auswertegerät 12 und ein Meldegerät 14. Das Auswertegerät 12 ist in diesem Ausführungsbeispiel ein Sicherheitsschaltgerät mit einem weitgehend festgelegten Funktionsumfang. Es ist dazu ausgebildet, Eingangssignale von Meldegeräten zu verarbeiten, um in Abhängigkeit davon einen Aktor, wie etwa einen Schütz, ein Magnetventil oder einen elektrischen Antrieb ein- oder auszuschalten. Alternativ zu einem Sicherheitsschaltgerät könnte das Auswertegerät 12 eine programmierbare Sicherheitssteuerung sein.

Das Auswertegerät 12 ist mehrkanalig-redundant und besitzt Testfunktionen, die dazu ausgebildet sind, interne Bauteilversagen und externe Fehler in der Verbindung zum Meldegerät 14 und im Meldegerät selbst zu erkennen, um eine überwachte Anlage bei Auftreten eines Fehlers in einen sicheren Zustand zu bringen. In den bevorzugten Ausführungsbeispielen ist das Auswertegerät 12 fehlersicher im Sinne der Kategorie 3 oder höher gemäß der europäischen Norm EN 954-1, im Sinne von SIL2 gemäß der internationalen Norm IEC 61508 oder im Sinne vergleichbarer Anforderungen. Vereinfacht sind hier zwei redundante Signalverarbeitungskanäle des Auswertegerätes 12 in Form von zwei Mikrocontrollern 16a, 16b dargestellt, die jeweils ein Schaltelement 18a, 18b ansteuern und miteinander über eine geeignete Schnittstelle kommunizieren, um sich gegenseitig zu überwachen. Anstelle von oder ergänzend zu Mikrocontrollern könnte das Auswertegerät 12 Mikroprozessoren, ASICs, FPGAs oder andere redundante Signal- und Datenverarbeitungsschaltkreise besitzen.

Die Schaltelemente 18 sind hier als Relais dargestellt, deren Arbeitskontakte in Reihe zueinander angeordnet sind. Die Arbeitskontakte bilden einen Stromversorgungspfad 20 zwischen einer Stromversorgung 22 und einem elektrischen Antrieb 24, der hier eine Maschinenanlage symbolisiert. Es versteht sich, dass die Maschinenanlage in realen Fällen eine Vielzahl von elektrischen Antrieben und anderen Aktoren beinhalten kann. Die Erfindung ist auch nicht auf Maschinenanlagen im Sinne von Produktionsmaschinen beschränkt. Sie kann vielmehr bei allen technischen Anlagen eingesetzt werden, von denen im Betrieb eine Gefahr ausgeht und die in einem solchen Fall in einen definierten Zustand gebracht werden müssen, insbesondere durch Unterbrechen eines Stromversorgungspfades 20. Anstelle oder in Ergänzung zu den Relais 18 kann das Auswertegerät 12 elektronische Schaltelemente aufweisen, insbesondere Leistungstransistoren. In einigen Ausführungsbeispielen besitzt das Auswertegerät 12 anstelle der Relais mehrere redundante elektronische Schaltelemente, die jeweils ein potenzialbezogenes Ausgangssignal bereitstellen, mit dem externe Schütze, Magnetventile oder dergleichen angesteuert werden können.

In den bevorzugten Ausführungsbeispielen besitzt das Auswertegerät 12 ein Gerätegehäuse 26, in dem die einzelnen Bauelemente, insbesondere die Mikrocontroller 16 und Schaltelemente 18, angeordnet sind. Am Gerätegehäuse sind Anschlussklemmen angeordnet, von denen hier einige mit den Bezugsziffern 28, 30, 32, 34, 36 und 38 bezeichnet sind.

Die Anschlussklemme 28 ist hier eine Anschlussklemme zum Zuführen einer Betriebsspannung U_{B} für das Auswertegerät 12, die insbesondere zur Versorgung der Mikrocontroller 16 benötigt wird (hier nicht im Detail dargestellt). In einigen Ausführungsbeispielen ist die Betriebsspannung U_{B} eine 24-Volt-Gleichspannung. Die Anschlussklemme 32 ist ein Masseanschluss, auf den sich die Versorgungsspannung U_{B} bezieht. Anschluss 32 ist in diesem Fall also die Gerätemasse des Auswertegerätes 12.

Die Anschlussklemmen 32 und 34 sind Anschlussklemmen zum Anschließen eines Leitungspaars, etwa einer Zweidrahtleitung 35, über die das Meldegerät 14 an das Auswertegerät 12 angeschlossen ist. Das Auswertegerät 12 kann weitere Anschlussklemmen 32, 34 zum Anschließen von weiteren Leitungspaaren besitzen. Die Anschlussklemmen 36 und 38 sind beispielhaft für eine Vielzahl von Anschlussklemmen bezeichnet, die zum Anschließen von Aktoren dienen. In diesem Fall ist Anschlussklemme 36 mit einer Phase der Stromversorgung 22 verbunden. An die Anschlussklemme 38 ist eine Phase des Antriebs 24 angeschlossen.

Gemäß einem bevorzugten Ausführungsbeispiel besitzt das Auswertegerät 12 hier einen Pull-up-Widerstand 40, der die Anschlussklemme 32 mit der Betriebsspannung U_{B} an der Anschlussklemme 28 verbindet. Das Potenzial an der Anschlussklemme 32 wird also im Regelfall auf das Potenzial der Betriebsspannung U_{B} "hochgezogen", was in Verbindung mit dem nachfolgend erläuterten Meldegerät eine besonders bevorzugte Realisierung ist. In einigen Ausführungsbeispielen kann der Pull-up-Widerstand 40 in die Anschlussklemmen 28, 30 integriert. In anderen Ausführungsbeispielen kann der Pull-up-Widerstand 40 außerhalb des Auswertegerätes 12 angeordnet sein, oder auch ganz fehlen.

Das Meldegerät 14 besitzt einen Betätiger 46, der in diesem Fall ein handbetätigter Taster ist. Der Betätiger 46 ist hier mit zwei elektrischen Kontakten 48a, 48b verbunden, die im Ruhezustand geschlossen sind und bei Betätigung des Taster geöffnet werden (Öffnerkontakte). Der geschlossene Zustand der Öffnerkontakte 48a, 48b entspricht hier einem definierten ersten Zustand im Sinne der vorliegenden Erfindung. Dieser definierte erste Zustand soll von dem Auswertegerät 12 erkannt werden, um in Abhängigkeit davon die Schaltelemente 18a, 18b zu schließen. Beispielsweise ist das Meldegerät ein Not-Aus-Taster. Der Betätiger 46 des Not-Aus-Tasters ist im Normalfall nicht gedrückt, der Antrieb 24 darf laufen. Wenn jedoch der Betätiger 46 in einer Not-Situation gedrückt wird, muss der Antrieb sofort angehalten werden. Des Weiteren soll der Antrieb 24 nicht laufen oder er muss angehalten werden, wenn das Auswertegerät 12 den sicheren (nicht-gedrückten) ersten Zustand des Betätigers nicht eindeutig detektieren kann, etwa weil einer der Kontakte 48a, 48b nicht vollständig geschlossen ist und/oder das Leitungspaar 35 beschädigt ist.

In anderen Ausführungsbeispielen kann das Meldegerät 14 ein Schutztürschalter, ein Positionsschalter, eine Lichtschranke, ein Zwei-Hand-Taster, ein Starttaster oder ein anderes Meldegerät sein, in Abhängigkeit von dessen Zustand eine technische Anlage fehlersicher ein- oder ausgeschaltet werden soll. Anstelle oder ergänzend zu den Kontakten 48a, 48b kann das Meldegerät 14 einen optischen, induktiven, kapazitiven oder anderen Detektor beinhalten, der zumindest einen definierten Zustand eines Betätigers signalisiert.

Im vorliegenden Fall kann der Betätiger 46 über ein Federelement (nicht dargestellt) in den definierten ersten Zustand vorgespannt sein. Wird der Betätiger 46 gegen die Kraft des Federelements heruntergedrückt, öffnet der Betätiger 46 die Kontakte 48a, 48b, was in Fig. 1 beispielhaft bei den Bezugsziffern 48a', 48b' dargestellt ist. Ein geöffneter Kontakt 48a', 48b' repräsentiert hier einen weiteren Zustand im Sinne der vorliegenden Erfindung, auf den das Auswertegerät 12 ggf. reagieren muss.

Das Meldegerät 14 besitzt ein Gerätegehäuse 50, an dem zwei Anschlussklemmen 52, 54 angeordnet sind. An den Anschlussklemmen 52, 54 ist das Leitungspaar 35 angeschlossen, das zum räumlich entfernten Auswertegerät 12 führt. In einigen Ausführungsbeispielen besitzt das Meldegerät 14 genau zwei Anschlussklemmen 52, 54 zum Anschließen von genau zwei Leitungen. In anderen Ausführungsbeispielen kann das Meldegerät 14 weitere Anschlussklemmen (hier nicht dargestellt) aufweisen, etwa zum Zuführen einer Betriebsspannung für die elektronischen Komponenten des Meldegerätes. Des Weiteren kann das Meldegerät 14 weitere Anschlussklemmen (hier nicht dargestellt) aufweisen, die eine Kaskadierung bzw. Reihenanordnung von Meldegeräten ermöglichen, wobei dann lediglich ein Meldegerät der Reihenanordnung mit dem Auswertegerät 12 verbunden ist.

Das Meldegerät 14 ist über die zwei Leitungen 56, 58 der Zweidrahtleitung 35 mit dem Auswertegerät 12 verbunden. Die erste Leitung 56 führt von der Anschlussklemme 54 des Meldegerätes zu der Anschlussklemme 34 des Auswertegerätes. Die zweite Leitung 58 führt von der Anschlussklemme 52 des Meldegerätes zu der Anschlussklemme 32 des Auswertegerätes. Im Betrieb sendet das Auswertegerät 12 ein definiertes erstes Pulssignal 60 mit einer Vielzahl von Signalpulsen 62 in einer ersten Richtung 63 über die Leitung 56 zum Meldegerät 14. Das Pulssignal 60 wird von der Anschlussklemme 54 zu zwei Schaltkreisen 64a, 64b im Meldegerät übertragen. Die Schaltkreise 64a, 64b sind dazu ausgebildet, das empfangene (erste) Pulssignal 60 nachzubilden und als zweites Pulssignal 66 mit einer Vielzahl von (zweiten) Signalpulsen 68 in einer zweiten Richtung 69 zum Auswertegerät 12 zu übertragen. In den bevorzugten Ausführungsbeispielen sind die Signalpulse 62, 68 Spannungspulse einer Spannung, die zwischen den zwei Leitungen 56, 58 messbar ist. In den bevorzugten Ausführungsbeispielen führt die (zweite) Leitung 58 ein weitgehend stationäres Referenzpotential, während das Meldegerät 12 die Signalpulse 62 des ersten Pulssignals 60 auf der ersten Leitung 56 erzeugt. Umgekehrt führt die Leitung 56 in den bevorzugten Ausführungsbeispielen ein weitgehend konstantes Massepotential, während das Meldegerät 14 mithilfe der Schaltkreise 64a, 64b das nachgebildete Pulssignal 66 auf der Leitung 58 erzeugt.

Wie man in der Darstellung in Fig. 1 erkennen kann, ist der Kontakt 48a zwischen dem Signalausgang des Schaltkreises 64a und der Anschlussklemme 52 angeordnet. Ebenso ist der Kontakt 48b zwischen dem Signalausgang des Schaltkreises 64b und der Anschlussklemme 52 angeordnet. Dementsprechend können die Schaltkreise 64 das zweite Pulssignal 66 auf der Leitung 58 nicht erzeugen, wenn die Kontakte 48a, 48b geöffnet sind (Bezugsziffer 48a', 48b'), das heißt wenn sich der Betätiger 46 nicht in seinem ersten definierten Zustand befindet. Folglich kann das Auswertegerät 12 das zweite Pulssignal 66 nicht empfangen. Das Auswertegerät 12 wird in einem solchen Fall die Schaltelemente 18a, 18b so ansteuern, dass der Stromversorgungspfad 20 zum Antrieb 24 unterbrochen wird.

Wie in Fig. 1 ferner angedeutet ist, müssen das erste Pulssignal 60 und das zweite Pulssignal 66 nicht identisch sein. Es genügt, wenn das zweite Pulssignal 66 eine vordefinierte Nachbildung des ersten Pulssignals 60 ist, etwa indem die vom jeweils sendenden Gerät ausgehenden Signalpulse 62, 68 invertiert zueinander sind. Ein Unterschied zwischen den beiden Pulssignalen 60, 66 kann auch daraus resultieren, dass das jeweilige Referenzpotential auf der anderen Leitung unterschiedlich ist. Ungeachtet dieser und möglicher weiterer Unterschiede bildet das Meldegerät 14 das vom Auswertegerät 12 gesendete erste Pulssignal 60 jedoch in einer definierten Weise nach, so dass das Auswertegerät 12 letztlich ein "Echo" vom Meldegerät 14 erhält, vorausgesetzt, dass sich der Betätiger 46 in seinem definierten ersten Zustand befindet.

Im Folgenden wird die Erzeugung des nachgebildeten zweiten Pulssignals 66 anhand von bevorzugten Ausführungsbeispielen des Meldegerätes 14 beispielhaft erläutert. Gleiche Bezugszeichen bezeichnen dabei dieselben Elemente wie zuvor.

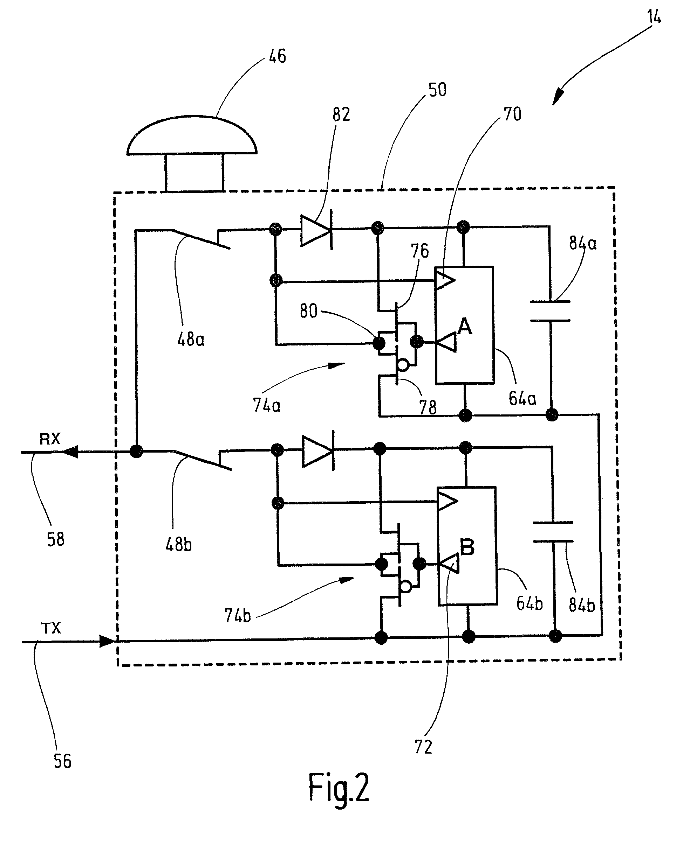

Gemäß Fig. 2 besitzt das Meldegerät 14 zwei Schaltkreise 64a, 64b, die jeweils als Impulsgenerator arbeiten. Jeder Schaltkreis 64a, 64b besitzt einen Signaleingang 70 und einen Signalausgang 72. Die Signaleingänge 70 der beiden Schaltkreise 64a, 64b sind jeweils über einen der Öffnerkontakte 48a, 48b mit der Leitung 58 verbunden. Diese ist in Fig. 2 als RX (Receive-)Leitung bezeichnet, da das Auswertegerät 12 über die Leitung 58 die Signalpulse 68 des nachgebildeten zweiten Pulssignals 66 empfängt.

Der Signalausgang 72 jedes Schaltkreises 64a, 64b steuert jeweils ein Schaltelement an. In dem dargestellten Ausführungsbeispiel ist das Schaltelement eine Gegentaktstufe 74a bzw. 74b, die von zwei Transistoren 76, 78 gebildet wird. Im dargestellten Ausführungsbeispiel sind die Transistoren 76, 78 Feldeffekttransistoren. Es könnten jedoch auch bipolare Transistoren oder andere Schaltelemente sein. Die Steueranschlüsse (Source) der Transistoren 76, 78 sind an einem Knoten zusammengeführt, der zum Signalausgang 72 des jeweiligen Schaltkreises 64a bzw. 64b führt. In ähnlicher Weise sind die Drain-Anschlüsse der Transistoren 76, 78 an einem Knoten 80 zusammengeführt. Der Knoten 80 ist über den jeweiligen Öffnerkontakt 48a, 48b mit der Leitung 58 verbunden.

Der Source-Anschluss jedes Transistors 76 ist über eine jeweilige Diode 82 (in Sperrrichtung) und den jeweiligen Öffnerkontakt 48a, 48b mit der Leitung 58 verbunden. Demgegenüber ist der Source-Anschluss des jeweiligen Transistors 78 direkt mit der Leitung 56 verbunden.

Wie bei einer Gegentaktstufe üblich, arbeiten die Transistoren 76, 78 komplementär zueinander, das heißt der Transistor 76 ist leitend, wenn der Transistor 78 sperrt und umgekehrt.

Parallel zu der Gegentaktstufe 74a, 74b ist jeweils ein Kondensator 84a, 84b angeordnet. Die Kondensatoren 84a, 84b bilden jeweils einen Energiespeicher, der über die Leitungen 56, 58 vom Auswertegerät 12 geladen werden kann. Dementsprechend stellen die Kondensatoren 84a, 84b jeweils eine Betriebsspannung für den zugeordneten Schaltkreis 64a, 64b zur Verfügung.

Das Meldegerät 14 aus Fig. 2 arbeitet mit dem Auswertegerät 12 aus Fig. 1 nun in folgender Weise zusammen: Bei der ersten Inbetriebnahme lädt das Auswertegerät 12 zunächst die Energiespeicher 64a, 64b im Meldegerät 14, indem das Auswertegerät 12 die Leitung 56 mit dem Massepotential belegt, wie dies in Fig. 1 bei der Bezugsziffer 86 dargestellt ist. Da die Leitung 58 über den Pull-up-Widerstand 40 auf das Potential der Betriebsspannung U_{B} hochgezogen wird, liegt die Betriebsspannung U_{B} zwischen den Leitungen 56, 58 an. Die Kondensatoren 84a, 84b werden auf die Betriebsspannung U_{B} aufgeladen. Beispielhaft sei angenommen, dass die Betriebsspannung U_{B} = 24 V ist. Dementsprechend haben sich die Kondensatoren 48a, 48b nach einer kurzen Ladezeit auf jeweils 24 V aufgeladen. Diese Betriebsspannung steht den Schaltkreisen 64a, 64b auch dann zur Verfügung, wenn das Auswertegerät 12 die Potentiale auf den Leitungen 56, 58 verändert.

Nach der anfänglichen, ersten Aufladung der Kondensatoren 84a, 84b sendet das Auswertegerät 12 das erste Pulssignal 60 an das Meldegerät 14. In dem hier dargestellten Ausführungsbeispiel erzeugt das Auswertegerät 12 abwechselnd High- und Low-Pegel auf der Leitung 56, wobei ein High-Pegel beispielsweise 24 V sein kann, während ein Low-Pegel 0 V ist. Wenn das Auswertegerät 12 einen Low-Pegel (0 V) auf der Leitung 56 erzeugt, besteht zwischen den Leitungen 56, 58 eine Potentialdifferenz von 24V, da die zweite Leitung 58 über den Pull-up-Widerstand 40 auf das Potential der Betriebsspannung U_{B} hochgezogen ist. Die Schaltkreise 64a, 64b "sehen" daher an ihrem jeweiligen Signaleingang 70 einen High-Pegel.

Wenn das Auswertegerät 12 die Leitung 56 mit einem High-Pegel (24 V) belegt, ist die Potentialdifferenz zwischen den Leitungen 56, 58 0 V. Die Schaltkreise 64a, 64b "sehen" an ihrem jeweiligen Signaleingang 70 einen Low-Pegel. Ungeachtet dessen bleibt die Betriebsspannung für die Schaltkreise 64a, 64b erhalten, da die Kondensatoren 84a, 84b dem Potentialwechsel auf der Leitung 56 aufgrund der Diode 82 nicht folgen können. Indem das Auswertegerät 12 die Leitung 56 in einem vordefinierten Muster mit High- und Low-Pegeln belegt, erzeugt das Auswertegerät 12 das erste Pulssignal 60 auf der Leitung 56. Die Schaltkreise 64a, 64b im Meldegerät 14 lesen das erste Pulssignal 60 an ihren jeweiligen Signaleingängen 70 ein. Sobald das erste Pulssignal 60 vollständig vom Auswertegerät 12 zum Meldegerät 14 übertragen wurde, antwortet das Meldegerät 14, indem es das nachgebildete Pulssignal 66 an das Auswertegerät 12 zurücksendet, es sei denn, die Kontakte 48a, 48b sind nicht geschlossen.

In einem Ausführungsbeispiel erzeugen die Schaltkreise 64a, 64b das zweite Pulssignal 66 abwechselnd zueinander, das heißt zunächst erzeugt der Schaltkreis 64a das zweite Pulssignal 66 alleine. Der zweite Schaltkreis 64b erzeugt das zweite Pulssignal 66 dann im nächsten Kommunikationszyklus ebenfalls alleine. Anschließend erzeugt wieder der erste Schaltkreis 64a das zweite Pulssignal, und zwar jeweils in Erwiderung auf ein erstes Pulssignal 60 vom Auswertegerät 12. In anderen Ausführungsbeispielen können die Schaltkreise 64a, 64b das zweite Pulssignal 66 gemeinsam erzeugen, indem sie die einzelnen Signalpulse 68 des Pulssignals 66 abwechselnd oder nach einem anderen vordefinierten Muster erzeugen.

In einem Ausführungsbeispiel kann das Auswertegerät 12 über ein Adressbit, das im ersten Pulssignal 60 enthalten ist, auswählen, welcher der beiden Schaltkreise 64a, 64b das zweite Pulssignal 66 erzeugen soll. In diesem Fall kann das Auswertegerät 12 die beiden Kanäle des Meldegerätes 14 gezielt ansprechen, um beispielsweise im Fall einer Fehlfunktion (inkonsistente zweite Pulssignale vom ersten und zweiten Schaltkreis 64a, 64b) feststellen zu können, welcher der Kontakte 48a, 48b geöffnet ist oder geschlossen ist. Zum Erzeugen der Signalpulse 68 des zweiten Pulssignals 66 steuert der jeweilige Schaltkreis 64a, 64b die Gegentaktstufe 74a, 74b so an, dass die Leitung 58 entweder über den Transistor 76 mit dem hohen Potential der Betriebsspannung am Kondensator 84a, 84b oder mit dem niedrigen Potential auf der Leitung 56 verbunden wird. Vorteilhafterweise belegt das Auswertegerät 12 zum Empfangen des zweiten Pulssignals 60 die Leitung 56 wiederum mit dem Massepotential (Bezugsziffer 86 in Fig. 1), während das Meldegerät 14 die Signalpulse 68 für das zweite Pulssignal 66 erzeugt. Jedes Mal, wenn der Transistor 78 leitend ist, werden die Leitungen 56, 58 gegeneinander kurzgeschlossen. Das Auswertegerät 12 "sieht" in diesem Fall ein Low-Potential auf der Empfangsleitung 58. Leitet hingegen der Transistor 76 im Meldegerät 14, "sieht" das Auswertegerät 12 ein High-Potential auf der Leitung 58.

Wie man anhand der vorstehenden Erläuterung erkennen kann, führt in dem bevorzugten Ausführungsbeispiel jeweils eine der Leitungen 56, 58 die Signalpulse 62, 68, während die andere Leitung ein weitgehend stationäres Referenzpotential bereitstellt. Wenn das Auswertegerät 12 das erste Pulssignal 60 erzeugt, ist das Referenzpotential auf der Leitung 58 die Betriebsspannung U_{B}. Im Gegensatz dazu ist das Referenzpotential auf der Leitung 56 das Masse-Potential, wenn das Meldegerät 14 die Signalpulse 68 des zweiten Pulssignals 66 erzeugt. Dadurch, dass jeweils eine der beiden Leitungen 56, 58 ein statisches Referenzpotential führt, während die andere Leitung definierte Potentialwechsel aufweist und dadurch dass die Signalpulse 62 des ersten Pulssignals 60 und die Signalpulse 68 des zweiten Pulssignals 66 auf unterschiedlichen Leitungen übertragen werden, ermöglicht das bevorzugte Ausführungsbeispiel eine hohe Erkennungswahrscheinlichkeit in Bezug auf etwaige Querschlüsse der Leitungen 56, 58 zu Fremdpotentialen. Die Querschlusserkennung ist besonders hoch, wenn das erste Pulssignal 60 und das nachgebildete zweite Pulssignal 66 eine individuelle Kennung beinhalten, beispielsweise in Form einer Seriennummer 88, die im Auswertegerät 12 abgespeichert ist. In diesem Fall erzeugen zwei typgleiche Auswertegeräte 12 voneinander unterschiedliche erste Pulssignale 60, und nur das an das jeweilige Auswertegerät 12 angeschlossene Meldegerät 14 kann das "richtige" Pulssignal 66 erzeugen, das der Erwartungshaltung im sendenden Auswertegerät 12 entspricht. Andererseits kann jedes verbundene Meldegerät 14 das "richtige" zweite Pulssignal 66 erzeugen, da das Pulssignal 66 lediglich als Nachbildung des vom Auswertegerät 12 empfangenen Pulssignals 60 ist. Eine individuelle "Paarbildung" zwischen Meldegerät 14 und Auswertegerät 12 vor Inbetriebnahme der Sicherheitsschaltungsanordnung 10 ist daher nicht erforderlich.

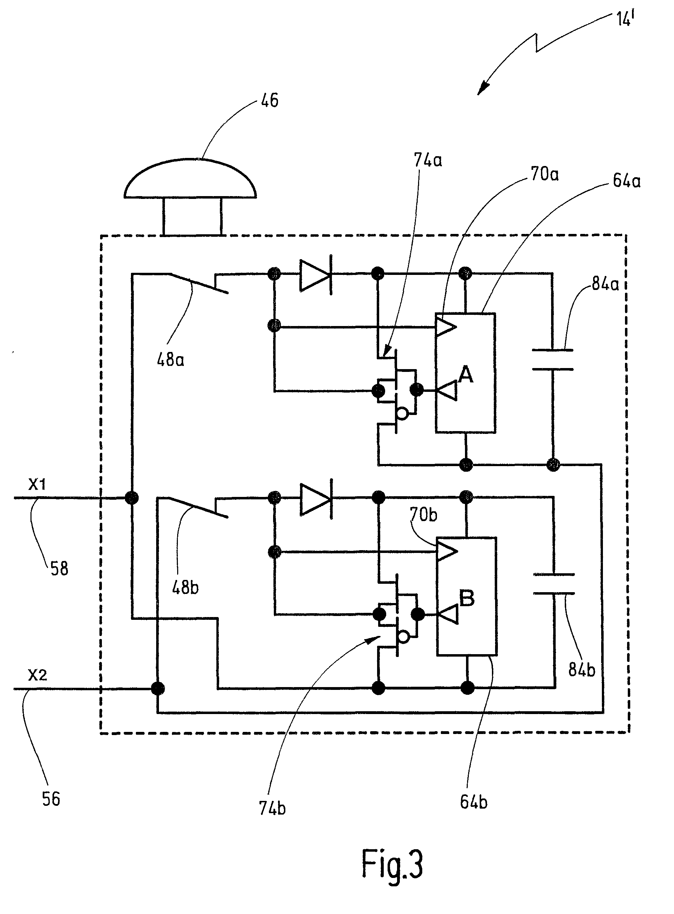

Fig. 3 zeigt ein weiteres Ausführungsbeispiel eines bevorzugten Meldegerätes, das im Unterschied zum vorhergehenden Ausführungsbeispiel nun mit der Bezugsziffer 14' bezeichnet ist. Im Übrigen bezeichnen gleiche Bezugszeichen wiederum dieselben Elemente wie zuvor.

Das Meldegerät 14' unterscheidet sich vom Meldegerät 14 dadurch, dass die Schaltkreise 64a, 64b und die jeweils zugehörigen Komponenten antiparallel mit den beiden Leitungen 56, 58 verbunden sind. Beispielsweise ist der Signaleingang 70a des Schaltkreises 64a über den Öffnerkontakt 48a mit der Leitung 58 verbunden, während der Signaleingang 70b des Schaltkreises 74b über den Öffnerkontakt 48b mit der Leitung 56 verbunden ist. Dementsprechend wechselt auch die zuvor beschriebene Funktion der Leitungen 56, 58 in Abhängigkeit davon, ob der Schaltkreis 64a oder der Schaltkreis 64b ein erstes Pulssignal vom Auswertegerät 12 aufnehmen und in Abhängigkeit davon ein zweites Pulssignal 66 erzeugen soll. Andererseits kann das Auswertegerät 12 über die jeweilige Polarität auf den Leitungen 56, 58 auswählen, welcher der Schaltkreise 64a, 64b das zweite Pulssignal 66 erzeugen soll.

Das Meldegerät 14' besitzt darüber hinaus den Vorteil, dass die Leitungen 56, 58 vertauscht an die entsprechenden Anschlussklemmen 52, 54 angeschlossen werden können, das heißt eine Verpolung ist ausgeschlossen.

In einigen Ausführungsbeispielen der Meldegeräte 14, 14' sind die Schaltkreise 64a, 64b so ausgebildet, dass sie ihren jeweiligen Signalausgang 72 inaktiv schalten, nachdem sie ein zweites Pulssignal 66 erzeugt haben, so dass ein erneuter Sendevorgang erst nach einem erneuten Empfang eines ersten Pulssignals 60 vom Auswertegerät 12 möglich ist.

Des Weiteren können die Schaltkreise 64a, 64b so ausgebildet sein, dass sie vom Auswertegerät 12 jeweils durch Umladen der Kondensatoren 64a, 64b deaktiviert werden können. Vorteilhafterweise sind die Schaltkreis 64a, 64b beim Meldegerät 14' identisch. Beim Meldegerät 14 aus Fig. 2 reagieren die Schaltkreise 64a, 64b demgegenüber auf das Adressbit im ersten Pulssignal 60 unterschiedlich, das heißt die Schaltkreise 64a, 64b sind in diesem Fall nicht identisch.

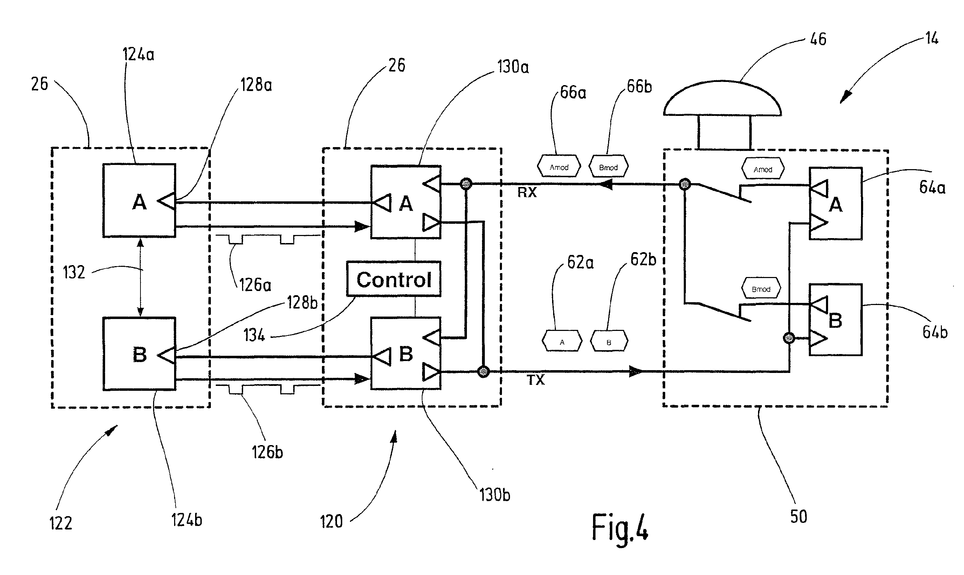

Fig. 4 zeigt ein weiteres Ausführungsbeispiel einer Sicherheitsschaltungsanordnung mit einem Meldegerät 14 und einem Auswertegerät 120. Gleiche Bezugszeichen bezeichnen wiederum dieselben Elemente wie zuvor.

In dem Ausführungsbeispiel gemäß Fig. 4 ist das Auswertegerät 120 eine Art Adaptergerät, das zwischen ein konventionelles Sicherheitsschaltgerät 122 und das neue Meldegerät 14 gesetzt wird, um das neue Meldegerät 14 an einem konventionellen Sicherheitsschaltgerät 122 zu betreiben. Beispielsweise ist das Sicherheitsschaltgerät 122 dasselbe Sicherheitsschaltgerät, das bei der Sicherheitsschaltungsanordnung in der eingangs genannten DE 10 2004 020 997 A1 verwendet ist. Dieses Dokument ist hier in Bezug auf die Details des Sicherheitsschaltgerätes 120 durch Bezugnahme aufgenommen. Das Sicherheitsschaltgerät 122 kann darüber hinaus jedes andere konventionelle Sicherheitsschaltgerät sein, das zumindest zwei redundante Eingänge aufweist, um zwei redundante Eingangssignale aufzunehmen. Anstelle eines Sicherheitsschaltgerätes 122 könnte auch eine herkömmliche Sicherheitssteuerung über das Adaptergerät 120 mit dem neuen Meldegerät 14 verbunden werden. Auch die Sicherheitssteuerung benötigt lediglich zwei redundante Eingänge zur Aufnahme von zwei redundanten Eingangssignalen.

Der Einfachheit halber ist das Sicherheitsschaltgerät 122 hier nur symbolisch mit zwei Signalverarbeitungskanälen 124a, 124b dargestellt. Die Ausgänge, über die Aktoren einer gefährlichen Anlage ein- oder ausgeschaltet werden können, sind nicht dargestellt.

Das Sicherheitsschaltgerät 122 erzeugt ein erstes und ein zweites Freigabesignal 126a, 126b. Die Freigabesignale 126a, 126b können zwei statische Signale sein, die beispielsweise im aktiven Zustand einen High-Pegel und im passiven Zustand einen Low-Pegel führen. Vorzugsweise sind die Freigabesignale 126a, 126b jedoch zwei dynamische Signale, insbesondere zwei Taktsignale, die bei konventionellen Sicherheitsschaltgeräten oder Sicherheitssteuerungen verwendet werden, um einen konventionellen Not-Aus-Taster, Schutztürschalter oder ein ähnliches Meldegerät zu überwachen (vergleiche insoweit auch die bereits genannte DE 10 2004 020 907 A1). Die Ausgangssignale 126a, 126b sind also typische, nichtindividualisierte Freigabesignale, die ein Sicherheitsschaltgerät 122 zum Überwachen eines zweikanaligen Meldegerätes bereitstellt.

Das Sicherheitsschaltgerät 122 erwartet an zwei Eingängen 128a, 128b zwei Eingangssignale, die genau den Freigabesignalen 126a, 126b entsprechen. Bei dem kontaktbehafteten, konventionellen Meldegerät werden die Freigabesignale 126a, 126b über die redundanten Kontakte des Meldegerätes auf die Eingänge 128a, 128b des Sicherheitsschaltgerätes 122 zurückgeschleift. Diese Schleife realisiert oder imitiert nun das Auswertegerät 120, indem es das erste Freigabesignal 126a über einen ersten Auswerteschaltkreis 130 an den ersten Eingang 128a des Sicherheitsschaltgerätes 122 zurückschickt, während es über einen zweiten Auswerteschaltkreis 130b das zweite Freigabesignal 126b an den zweiten Eingang 128b zurückschickt. Voraussetzung ist allerdings, dass das Auswertegerät 120 den definierten ersten Zustand des Betätigers 46 im Meldegerät 14 in der weiter oben beschriebenen Weise fehlerfrei erkannt hat. Dementsprechend sendet das Auswertegerät 120 wiederholt erste Pulssignale 62a, 62b an das Meldegerät 14, und es erwartet entsprechend nachgebildete zweite Pulssignale 66a, 66b, die von den Schaltkreisen 64a, 64b im Meldegerät 14 erzeugt werden. Für die Darstellung in Fig. 4 ist angenommen, dass das Auswertegerät 120 zwei verschiedene erste Pulssignale 62a, 62b erzeugt, um die redundanten Kanäle des Meldegerätes 14 selektiv anzusprechen.

In einem Ausführungsbeispiel unterscheiden sich die ersten Pulssignale lediglich durch ein Adressbit, das für den einen Kanal 0 und für den anderen Kanal 1 ist. Dementsprechend können sich auch die nachgebildeten zweiten Pulssignale in Bezug auf das eine Adressbit unterscheiden. Es ist jedoch auch möglich, dass das Auswertegerät 120 die redundanten Kanäle des Meldegerätes 14 durch wechselnde Polaritäten anspricht, wie dies weiter oben anhand von Fig. 3 erläutert wurde. Des Weiteren kann das Auswertegerät 120 das Meldegerät 14 prinzipiell auch ohne selektive Kanalwahl überwachen, etwa indem das Meldegerät 14 das nachgebildete zweite Pulssignal mithilfe von beiden Schaltkreisen 64, 64b erzeugt.

In einigen Ausführungsbeispielen erfolgt die Plausibilisierung der vom Meldegerät 14 gesendeten zweiten Pulssignale erst im Sicherheitsschaltgerät 122. In diesem Fall sendet der Auswerteschaltkreis 130a das Freigabesignal 126a stets an den Eingang 128a, so lange er vom Meldegerät 14 zu "seinem" ersten Pulssignal 62a das erwartete zweite Pulssignal 66a erhält. Gleiches gilt für den zweiten Auswerteschaltkreis 130b. In diesem Fall "kümmern sich" die Auswerteschaltkreise 130a, 130b also nicht um die Pulssignale des jeweils anderen Auswerteschaltkreises 130b, 130a. Erst im Sicherheitsschaltgerät 122 wird anhand der zurückgesendeten Freigabesignale überwacht, ob beide Kanäle des Meldegerätes 14 konsistente Ergebnisse liefern. Zu diesem Zweck vergleichen die Signalverarbeitungskanäle 124a, 124b ihre jeweiligen Ergebnisse in an sich bekannter Weise, was durch einen Pfeil 132 schematisch angedeutet ist. Ein Control-Kreis 134 im Auswertegerät 120 dient lediglich zur zeitlichen Synchronisierung der Auswerteschaltkreise 130a, 130b.

Alternativ hierzu ist es in anderen Ausführungsbeispielen möglich, dass schon das Auswertegerät 120 die Plausibilisierung der Signale vom Meldegerät 114 übernimmt, indem die Auswerteschaltkreise 130a, 130b ihre jeweiligen Überwachungsergebnisse miteinander vergleichen. Die zuerst genannte Alternative ermöglicht allerdings eine einfachere und damit kostengünstigere Realisierung des Auswertegerätes 120 in Form eines Adaptergerätes.

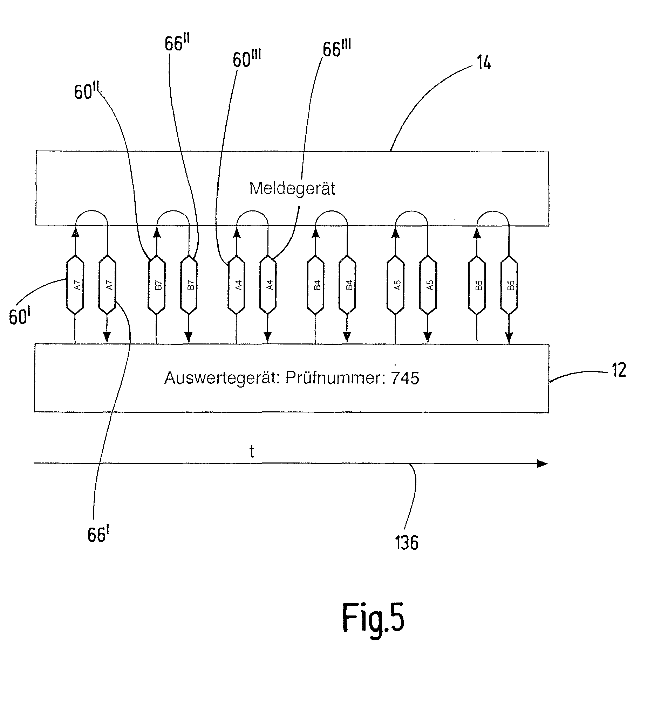

Fig. 5 zeigt anhand einer stark vereinfachten Darstellung eine weitere Variante, die im Zusammenhang mit allen zuvor beschriebenen Ausführungsbeispielen zur Anwendung kommen kann. Dargestellt ist eine Zeitachse 136 sowie der zeitliche Ablauf, in dem erste und zweite Pulssignale vom Auswertegerät 12 und Meldegerät 14 erzeugt werden.

In den bevorzugten Ausführungsbeispielen erzeugt das Auswertegerät eine erste Serie von ersten Pulssignalen, von denen einige hier mit den Bezugsziffern 60', 60", 60'" bezeichnet sind. Das Meldegerät 14 erzeugt eine entsprechende zweite Serie von zweiten Pulssignalen 66', 66", 66"'. Jedes zweite Pulssignal 66 ist eine definierte Nachbildung des zuvor gesendeten ersten Pulssignals 60. Außerdem bildet die erste Serie von ersten Pulssignalen ein Datenwort mit einer Vielzahl von Stellen.

Beispielhaft sei angenommen, dass das Datenwort die Prüfnummer 745 ist. Die einzelnen Stellen bzw. Ziffern der Prüfnummer werden nun der Reihe nach vom Auswertegerät zum Meldegerät übertragen und vom Meldegerät zurückgesendet. Zusätzlich wechseln hier auch noch die beiden Kanäle, das heißt zunächst sendet der erste Kanal (hier Kanal A) die erste Ziffer der Prüfnummer (hier die Ziffer 7) mithilfe eines ersten Pulssignals A7 an das Meldegerät. Der erste Kanal im Meldegerät (hier ebenfalls als Kanal A bezeichnet) bildet das erste Pulssignal nach und erzeugt das zweite Pulssignal (Bezugsziffer 66'). Anschließend erfolgt der Austausch der Pulssignale 60", 66", in denen erneut die erste Ziffer "7" der Prüfnummer codiert ist, wobei der Datenaustausch nun über die zweiten Kanäle (Kanal B) erfolgt. Daran anschließend kommunizieren wieder die ersten Kanäle, wobei das Auswertegerät die nächste Stelle/Ziffer der Prüfnummer an das Meldegerät sendet und das Meldegerät die entsprechende Information nachbildet. Auf diese Weise wird ein Datenwort mit einer Vielzahl von Stellen "stellenweise" in Form von ersten und zweiten Pulssignalen zwischen dem Auswertegerät und dem Meldegerät ausgetauscht. Diese Variante ermöglicht es, sehr lange Prüfnummern zwischen dem Auswertegerät und dem Meldegerät auszutauschen, wobei das Meldegerät trotzdem in sehr kurzen Zeitintervallen auf das Auswertegerät reagiert.

In einigen Ausführungsbeispielen wird die individuelle Seriennummer des Auswertegerätes als Prüfnummer verwendet, wobei diese Seriennummer acht Stellen, zehn Stellen oder sogar noch mehr Stellen enthalten kann. Spätestens nach einem Zyklus, in dem alle Stellen des Datenwortes zwischen Auswertegerät und Meldegerät ausgetauscht wurden, kann das Auswertegerät überprüfen, ob es vom Meldegerät die richtige Kennung vollständig zurückbekommt. Andererseits kann das Auswertegerät sehr schnell auf eine etwaige Betätigung des Betätigers im Meldegerät oder auf einen Leitungsbruch reagieren, da das erwartete zweite Pulssignal (mit der einen aktuell gesendeten Stelle der mehrstelligen Prüfnummer) ausbleibt.

## Patentansprüche

1. Sicherheitsschaltungsanordnung zum fehlersicheren Ein- oder Ausschalten einer gefährlichen Anlage (24), mit einem Auswertegerät (12), das dazu ausgebildet ist, ein redundantes Schaltsignal zum fehlersicheren Ein- oder Ausschalten der Anlage (24) zu erzeugen, und mit einem Meldegerät (14), das über eine Anzahl von Leitungen (56, 58) mit dem Auswertegerät (12) verbunden ist, wobei das Meldegerät (14) einen Betätiger (46) aufweist, der zwischen einem definierten ersten Zustand (48a, 48b) und einem weiteren Zustand (48a', 48b') wechselbar ist, wobei das Auswertegerät (12) ein erstes definiertes Pulssignal (60) mit einer Anzahl von ersten Signalpulsen (62) erzeugt und in einer ersten Richtung (63) über die Leitungen (56, 58) zum Meldegerät (14) überträgt, wobei das Meldegerät (14) ein zweites definiertes Pulssignal (66) mit einer Anzahl von zweiten Signalpulsen (68) erzeugt und über die Leitungen (56, 58) in einer zweiten Richtung (69) zum Auswertegerät (12) überträgt, wenn der Betätiger (46) in dem definierten ersten Zustand (48a, 48b) ist, und wobei das zweite Pulssignal (66) eine vordefinierte Nachbildung des ersten Pulssignals (60) ist, **dadurch gekennzeichnet, dass** das Meldegerät (14) mit dem Auswertegerät (12) über ein einzelnes Leitungspaar (35) mit einer ersten und einer zweiten Leitung (56, 58) verbunden ist, über die sowohl das erste als auch das zweite Pulssignal (60, 66) zeitlich nacheinander übertragen werden.

2. Sicherheitsschaltungsanordnung nach Anspruch 1, **dadurch gekennzeichnet, dass** die erste Leitung (56) das erste Pulssignal (60) überträgt, während die zweite Leitung (58) ein erstes Referenzpotential (U_{B}) führt, und die zweite Leitung (58) überträgt das zweite Pulssignal (66), während die erste Leitung (56) ein zweites Referenzpotential (86) führt.

3. Sicherheitsschaltungsanordnung nach Anspruch 1 oder 2, **dadurch gekennzeichnet, dass** das Meldegerät (14) das zweite Pulssignal (66) nur erzeugt, wenn der Betätiger (46) in dem definierten ersten Zustand (48a, 48b) ist.

4. Sicherheitsschaltungsanordnung nach einem der Ansprüche 1 bis 3, **dadurch gekennzeichnet, dass** das erste Pulssignal (60) eine vordefinierte Kennung (88) beinhaltet, die das Auswertegerät (12) eindeutig identifiziert.

5. Sicherheitsschaltungsanordnung nach einem der Ansprüche 1 bis 4, **dadurch gekennzeichnet, dass** das Meldegerät (14) einen Energiespeicher (84a, 84b) aufweist, der von dem Auswertegerät (12) über die erste und die zweite Leitung (56, 58) aufgeladen wird.

6. Sicherheitsschaltungsanordnung nach einem der Ansprüche 1 bis 5, **dadurch gekennzeichnet, dass** das Meldegerät (14) einen ersten Kanal (64a) und einen zweiten Kanal (64b) aufweist, die den ersten Zustand (48a, 48b) des Betätigers (46) redundant überwachen.

7. Sicherheitsschaltungsanordnung nach Anspruch 6, **dadurch gekennzeichnet, dass** sowohl der erste als auch der zweite Kanal (64a, 64b) die zweiten Signalpulse (68) erzeugen.

8. Sicherheitsschaltungsanordnung nach Anspruch 6 oder 7, **dadurch gekennzeichnet, dass** der erste Kanal (64a) und der zweite Kanal (64b) parallel zueinander an die zwei Leitungen (56, 58) angeschlossen sind.

9. Sicherheitsschaltungsanordnung nach einem der Ansprüche 6 bis 8, **dadurch gekennzeichnet, dass** der erste Kanal (64a) und der zweite Kanal (64b) antiparallel zueinander an die zwei Leitungen (56, 58) angeschlossen sind.

10. Sicherheitsschaltungsanordnung nach einem der Ansprüche 1 bis 9, **dadurch gekennzeichnet, dass** das Meldegerät (14) zumindest einen Betätigerschalter (48) aufweist, der in Abhängigkeit von dem Zustand des Betätiger (46) geöffnet oder geschlossen ist, und zumindest einen Impulsgenerator (64), der das zweite Pulssignal (66) erzeugt, wobei der zumindest eine Betätigerschalter (48) zwischen dem Impulsgenerator (64) und dem Leitungspaar (35) angeordnet ist.

11. Sicherheitsschaltungsanordnung nach einem der Ansprüche 1 bis 10, **dadurch gekennzeichnet, dass** das Meldegerät (14) zumindest einen Impulsgenerator (64) aufweist, der das zweite Pulssignal (66) erzeugt, wobei der zumindest eine Impulsgenerator (64) einen ersten Schalter (78) aufweist, der dazu ausgebildet ist, die erste und die zweite Leitung (56, 58) gegeneinander kurzzuschließen.

12. Sicherheitsschaltungsanordnung nach Anspruch 11, **dadurch gekennzeichnet, dass** der zumindest eine Impulsgenerator (64) einen zweiten Schalter (76) aufweist, der mit dem ersten Schalter (78) eine Gegentaktstufe (74) bildet.

13. Sicherheitsschaltungsanordnung nach einem der Ansprüche 1 bis 12, **dadurch gekennzeichnet, dass** das Auswertegerät (12) eine erste Serie von ersten Pulssignalen (60) erzeugt und dass das Meldegerät (14) eine zweite Serie von zweiten Pulssignalen (66) erzeugt, wobei die erste Serie ein Datenwort ("745") mit einer Vielzahl von ersten Stellen bildet, wobei die zweite Serie ein Datenwort mit einer Vielzahl von zweiten Stellen bildet, und wobei die ersten und zweiten Stellen wechselweise über das Leitungspaar (35) übertragen werden.

14. Meldegerät für eine Sicherheitsschaltungsanordnung nach einem der Ansprüche 1 bis 13, mit einem Betätiger (46), der zwischen einem definierten ersten Zustand (48a, 48b) und einem weiteren Zustand (48a', 48b') wechselbar ist, und mit einem Paar von Anschlussklemmen (52, 54) zum Anschließen einer ersten und einer zweiten Leitung (56, 58), die ein Leitungspaar (35) bilden, ferner mit zumindest einem Impulsgenerator, der dazu ausgebildet ist, ein erstes definiertes Pulssignal (60) mit einer Vielzahl von ersten Signalpulsen (62) über das Leitungspaar (35) zu empfangen und in Reaktion auf das erste definierte Pulssignal (60) ein zweites definiertes Pulssignal (66) mit einer Vielzahl von zweiten Signalpulsen (68) auf dem Leitungspaar (35) zu erzeugen, wenn der Betätiger (46) in dem definierten ersten Zustand ist, wobei das zweite Pulssignal (66) eine vordefinierte Nachbildung des ersten Pulssignals (60) ist.

15. Auswertegerät für eine Sicherheitsschaltungsanordnung nach einem der Ansprüche 1 bis 13, mit einem ersten Paar von Anschlussklemmen ( 32, 34) zum Anschließen von einer ersten und einer zweiten Leitung (56, 58), die ein Leitungspaar (35) bilden, und mit weiteren Anschlussklemmen (36, 38) zum Ausgeben eines fehlersicheren Schaltsignals zum Abschalten einer gefährlichen Anlage (24), mit zumindest einem Auswertekreis (16), der dazu ausgebildet ist, ein definiertes erstes Pulssignal (60) mit einer Vielzahl von ersten Signalpulsen (62) auf dem Leitungspaar (35) zu erzeugen, wobei der Auswertekreis (16) ferner dazu ausgebildet ist, ein definiertes zweites Pulssignal (66) mit einer Vielzahl von zweiten Signalpulsen (68) über das Leitungspaar (35) aufzunehmen und mit dem ersten definierten Pulssignal (60) zu vergleichen, und wobei der Auswertekreis (16) dazu ausgebildet ist, das fehlersichere Schaltsignal an den weiteren Anschlussklemmen (36, 38) in Abhängigkeit davon zu erzeugen, ob das zweite Pulssignal (66) eine vordefinierte Nachbildung des ersten Pulssignals (60) ist.

## Claims

1. A safety circuit assembly for switching a hazardous system (24) on or off in a failsafe manner, comprising an evaluating device (12) designed to produce a redundant switching signal for switching the system (24) on or off in a failsafe manner, and comprising a signaling device (14) connected to the evaluating device (12) via a number of lines (56, 58), wherein the signaling device (14) has an actuator (46) which can be switched between a defined first state (48a, 48b) and a further state (48a', 48b'), wherein the evaluating device (12) produces a first defined pulse signal (60) having a number of first signal pulses (62) and transmits the first defined pulse signal to the signaling device (14) in a first direction (63) by means of the lines (56, 58), wherein the signaling device (14) produces a second defined pulse signal (66) having a number of second signal pulses (68) and transmits the second defined pulse signal to the evaluating device (12) in a second direction (69) by means of the lines (56, 58) when the actuator (46) is in the defined first state (48a, 48b), and wherein the second pulse signal (66) is a predefined replica of the first pulse signal (60), **characterized in that** the signaling device (14) is connected to the evaluating device (12) via a single pair of lines (35) having a first and a second line (56, 58) via which both the first and the second pulse signal (60, 66) are transmitted one after the other in time.

2. The safety circuit assembly of claim 1, **characterized in that** the first line (56) transmits the first pulse signal (60) whilst the second line (58) carries a first reference potential (U_{B}), and the second line (58) transmits the second pulse signal (66) whilst the first line (56) carries a second reference potential (86).

3. The safety circuit assembly of claim 1 or 2, **characterized in that** the signaling device (14) generates the second pulse signal (66) only when the actuator (46) is in the defined first state (48a, 48b).

4. The safety circuit assembly of one of claims 1 to 3, **characterized in that** the first pulse signal (60) comprises a predefined identifier (88) which unambiguously identifies the evaluating device (12).

5. The safety circuit assembly of one of claims 1 to 4, **characterized in that** the signaling device (14) has an energy store (84a, 84b) which is charged up by the evaluating device (12) via the first and the second line (56, 58).

6. The safety circuit assembly of one of claims 1 to 5, **characterized in that** the signaling device (14) has a first channel (64a) and a second channel (64b) which monitor the first state (48a, 48b) of the actuator (46) in a redundant manner.

7. The safety circuit assembly of claim 6, **characterized in that** both the first and the second channel (64a, 64b) generate the second signal pulses (68).

8. The safety circuit assembly of claim 6 or 7, **characterized in that** the first channel (64a) and the second channel (64b) are connected to the two lines (56, 58) in parallel with one another.

9. The safety circuit assembly of one of claims 6 to 8, **characterized in that** the first channel (64a) and the second channel (64b) are connected to the two lines (56, 58) in antiparallel fashion with one another.

10. The safety circuit assembly of one of claims 1 to 9, **characterized in that** the signaling device (14) has at least one actuator switch (48) which is opened or closed in dependence on the state of the actuator (46), and at least one pulse generator (64) which generates the second pulse signal (66), wherein the at least one actuator switch (48) is arranged between the pulse generator (64) and the pair of lines (35).

11. The safety circuit assembly of one of claims 1 to 10, **characterized in that** the signaling device (14) has at least one pulse generator (64) which generates the second pulse signal (66), wherein the at least one pulse generator (64) has a first switch (78) designed for short circuiting the first and the second line (56, 58) to one another.

12. The safety circuit assembly of claim 11, **characterized in that** the at least one pulse generator (64) has a second switch (76) which forms a push-pull stage (74) with the first switch (78).

13. The safety circuit assembly of one of claims 1 to 12, **characterized in that** the evaluating device (12) generates a first series of first pulse signals (60) and the signaling device (14) generates a second series of second pulse signals (66), wherein the first series forms a data word ("745") having a plurality of first digits, wherein the second series forms a data word having a plurality of second digits, and wherein the first and second digits are transmitted alternately via the pair of lines (35).

14. A signaling device for a safety circuit assembly of one of claims 1 to 13, comprising an actuator (46) which can be switched between a defined first state (48a, 48b) and a further state (48a', 48b'), and comprising a pair of connecting terminals (52, 54) for connecting a first and a second line (56, 58) which form a pair of lines (35), further comprising at least one pulse generator designed for receiving a first defined pulse signal (60) having a plurality of first signal pulses (62) via the pair of lines (35) and, in response to the first defined pulse signal (60), generating a second defined pulse signal (66) having a plurality of second signal pulses (68) on the pair of lines (35) when the actuator (46) is in the defined first state, wherein the second pulse signal (66) is a predefined replica of the first pulse signal (60).

15. An evaluating device for a safety circuit assembly of one of claims 1 to 13, comprising a first pair of connecting terminals (32, 34) for connecting a first and a second line (56, 58) which form a pair of lines (35), and comprising further connecting terminals (36, 38) for outputting a failsafe switching signal for shutting down a hazardous system (24), comprising at least one evaluating circuit (16) which is designed for generating a defined first pulse signal (60) having a plurality of first signal pulses (62) on the pair of lines (35), wherein the evaluating circuit (16) is further designed for receiving a defined second pulse signal (66) having a plurality of second signal pulses (68) via the pair of lines (35) and comparing the defined second pulse signal to the first defined pulse signal (60), and wherein the evaluating circuit (16) is designed for generating the failsafe switching signal at the further connecting terminals (36, 38) in dependence on whether the second pulse signal (66) is a predefined replica of the first pulse signal (60).

## Revendications

1. Circuit de sécurité destiné à brancher et débrancher de manière sécurisée une installation dangereuse (24),
le circuit présentant un appareil d'évaluation (12) configuré pour former un signal redondant de commutation permettant de brancher ou de débrancher de manière sécurisée l'installation (24) et un appareil de signalisation (14) qui est raccordé par plusieurs conducteurs (56, 58) à l'appareil d'évaluation (12),
l'appareil de signalisation (14) présentant un dispositif d'actionnement (46) qui peut être commuté entre un premier état défini (48a, 48b) et un autre état (48a', 48b'),
l'appareil d'évaluation (12) formant un premier signal pulsé défini (60) qui présente plusieurs premières impulsions de signal (62) et le transmettant dans une première direction (63) à l'appareil de signalisation (14) par les conducteurs (56, 58),
l'appareil de signalisation (14) formant un deuxième signal pulsé défini (66) présentant plusieurs deuxièmes impulsions de signal (68) et les transmettant à l'appareil d'évaluation (12) dans une deuxième direction (69) par les conducteurs (56, 58) lorsque le dispositif d'actionnement (46) se trouve dans le premier état défini (48a, 48b),
le deuxième signal pulsé (66) étant une copie prédéfinie du premier signal pulsé (60),
**caractérisé en ce que**
l'appareil de signalisation (14) est raccordé à l'appareil d'évaluation (12) par une seule paire (35) de conducteurs qui présente un premier et un deuxième conducteur (56, 58) par lesquels tant le premier que le deuxième signal pulsé (60, 66) sont transmis successivement.

2. Circuit de sécurité selon la revendication 1, **caractérisé en ce que** le premier conducteur (56) transmet le premier signal pulsé (60) tandis que le deuxième conducteur (58) conduit un potentiel de référence (U_{B}), le deuxième conducteur (58) transmettant le deuxième signal pulsé (66) tandis que le premier conducteur (56) conduit un deuxième potentiel de référence (86).

3. Circuit de sécurité selon les revendications 1 ou 2, **caractérisé en ce que** l'appareil de signalisation (14) ne forme le deuxième signal pulsé (66) que si le dispositif d'actionnement (46) se trouve dans le premier état défini (48a, 48b).

4. Circuit de sécurité selon l'une des revendications 1 à 3, **caractérisé en ce que** le premier signal pulsé (60) contient une caractérisation prédéfinie (88) qui identifie de manière univoque l'appareil d'évaluation (12).

5. Circuit de sécurité selon l'une des revendications 1 à 4, **caractérisé en ce que** l'appareil de signalisation (14) présente un accumulateur d'énergie (84a, 84b) qui est chargé par l'appareil d'évaluation (12) par l'intermédiaire du premier et du deuxième conducteur (56, 58).

6. Circuit de sécurité selon l'une des revendications 1 à 5, **caractérisé en ce que** l'appareil de signalisation (14) présente un premier canal (64a) et un deuxième canal (64b) qui surveillent de manière redondante le premier état (48a, 48b) du dispositif d'actionnement (46).

7. Circuit de sécurité selon la revendication 6, **caractérisé en ce que** tant le premier que le deuxième canal (64a, 64b) forment les deuxièmes impulsions (68) du signal.

8. Circuit de sécurité selon les revendications 6 ou 7, **caractérisé en ce que** le premier canal (64a) et le deuxième canal (64b) sont raccordés en parallèle l'un à l'autre aux deux conducteurs (56, 58).

9. Circuit de sécurité selon les revendications 6 à 8, **caractérisé en ce que** le premier canal (64a) et le deuxième canal (64b) sont raccordés de manière mutuellement antiparallèle aux deux conducteurs (56, 58).

10. Circuit de sécurité selon les revendications 1 à 9, **caractérisé en ce que** l'appareil de signalisation (14) présente au moins un commutateur d'actionnement (48) qui est ouvert ou fermé en fonction de l'état du dispositif d'actionnement (46) et au moins un générateur (64) d'impulsions qui forme le deuxième signal puisé (66), le ou les commutateurs d'actionnement (48) étant disposés entre le générateur (64) d'impulsions et la paire (35) de conducteurs.

11. Circuit de sécurité selon les revendications 1 à 10, **caractérisé en ce que** l'appareil de signalisation (14) présente au moins un générateur (64) d'impulsions qui forme le deuxième signal pulsé (66), le ou les générateurs (64) d'impulsions présentant un premier commutateur (78) configuré pour mettre en court-circuit mutuel le premier et le deuxième conducteur (56, 58).

12. Circuit de sécurité selon la revendication 11, **caractérisé en ce que** le ou les générateurs (64) d'impulsions présentent un deuxième commutateur (76) qui forme un étage (74) dit push-pull avec le premier commutateur (78).

13. Circuit de sécurité selon les revendications 1 à 12, **caractérisé en ce que** l'appareil d'évaluation (12) forme une première série de premiers signaux pulsés (60) et **en ce que** l'appareil de signalisation (14) forme une deuxième série de deuxièmes signaux pulsés (66), la première série formant un mode donné ("745") présentant plusieurs premiers emplacements, la deuxième série formant un mode donné présentant plusieurs deuxièmes emplacements, les premiers et les deuxièmes emplacements étant transmis en alternance par la paire (35) de conducteurs.

14. Appareil de signalisation pour circuit de sécurité selon l'une des revendications 1 à 13, présentant
un dispositif d'actionnement (46) apte à être commuté entre un premier état défini (48a, 48b) et un deuxième état défini (48a', 48b') et
une paire de bornes de raccordement (52, 54) qui assure le raccordement à un premier et un deuxième conducteur (56, 58) qui forment une paire (35) de conducteurs,
et en outre au moins un générateur d'impulsions configuré pour recevoir sur la paire (35) de conducteurs un premier signal pulsé défini (60) qui présente plusieurs premières impulsions (62) de signal et, en réaction au premier signal pulsé défini (60), former un deuxième signal pulsé défini (66) qui présente plusieurs deuxièmes impulsions (68) de signal sur la paire (35) de conducteurs lorsque le dispositif d'actionnement (46) se trouve dans le premier état défini, le deuxième signal pulsé (66) étant une copie prédéfinie du premier signal pulsé (60).

15. Appareil d'évaluation pour circuit de sécurité selon l'une des revendications 1 à 13, présentant
une première paire de bornes de raccordement (32, 34) qui assurent le raccordement à un premier et un deuxième conducteur (56, 58) qui forment une paire (35) de conducteurs et
d'autres bornes de raccordement (36, 38) qui délivrent un signal de commutation sécurisé qui débranche une installation dangereuse (24) et
au moins un circuit d'évaluation (16) configuré pour former sur la paire (35) de conducteurs un premier signal pulsé défini (60) qui présente plusieurs premières impulsions (62) de signal,
le circuit d'évaluation (16) étant en outre configuré pour recevoir par la paire (35) de conducteurs un deuxième signal pulsé défini (66) qui présente plusieurs deuxièmes impulsions de signal (68) et pour les comparer au premier signal pulsé défini (60),
le circuit d'évaluation (16) étant configuré pour former le signal de commutation sécurisé sur les autres bornes de raccordement (36, 38) selon que le deuxième signal pulsé (66) est ou non une copie prédéfinie du premier signal pulsé (60).
